# EUROPEAN PATENT APPLICATION

(11) **EP 4 797 613 A1**
(43) Date of publication of application: **26.08.2026**
(21) Application number: 24892734.5
(22) Date of filing: 03.06.2024
(51) Int. Cl.: H04L 9/40

(54) **MESSAGE TRANSMISSION METHOD AND APPARATUS**

(30) Priority: 21.11.2023 CN 202311563092; 26.04.2024 CN 202410529260
(71) Applicant: Huawei Cloud Computing Technologies Co., Ltd., Gui'an New District, Guizhou 550025 (CN)
(72) Inventor: XIONG, Ying, Guiyang, Guizhou 550025 (CN); LI, Hui, Guiyang, Guizhou 550025 (CN); ZHANG, Haohao, Guiyang, Guizhou 550025 (CN); WANG, Tinghai, Guiyang, Guizhou 550025 (CN)
(74) Representative: Isarpatent
(86) International application number: PCT/CN2024/097069
(87) International publication number: WO 2025/107569

(57) **Abstract**

This application discloses a packet transmission method and an apparatus, and belongs to the field of security technologies. The method is applied to a security module of a service end, the service end is configured to provide a target service for a client, and the client is a registered user of the target service. The method includes: receiving a target service packet that is sent by the client and that is used to access the target service, where a destination address of the target service packet includes a verification field; verifying the destination address of the target service packet based on the verification field, to determine that the destination address of the target service packet is a preconfigured address; and sending the target service packet to the service end. The preconfigured address is an IPv6 address that is configured for the client and that is used to access the target service. In this method, a huge IPv6 address space is used to allocate an access address to the service end that provides the target service, so that an attack source cannot directly launch a DDoS carpet-bombing attack against the target service.

## Description

This application claims priorities to Chinese Patent Application No. 202311563092.X, filed on November 21, 2023 and entitled "DATA PROCESSING METHOD, APPARATUS, AND ANOTHER DEVICE", and to Chinese Patent Application No. 202410529260.1, filed on April 26, 2024 and entitled "PACKET TRANSMISSION METHOD AND APPARATUS", both of which are incorporated herein by reference in their entireties.

### TECHNICAL FIELD

This application relates to the field of security technologies, and in particular, to a packet transmission method and an apparatus.

### BACKGROUND

A distributed denial of service (distributed denial of service, DDoS) attack is an old but always active attack method. The DDoS attack generally uses proper service requests to occupy excessive service resources, causing authorized users to fail to obtain service responses.

Currently common DDoS attacks that are difficult to defend include but are not limited to elephant flow attacks, real source attacks, carpet-bombing attacks, and the like. The elephant flow attack is an attack continuously accessing a large quantity of target services through one network connection. Because the elephant flow attack focuses on one network connection, it is difficult to disperse traffic of the elephant flow attack to a plurality of central processing units (central processing units, CPUs) for defense. The real source attack is launched by using many real hosts as attack sources. Therefore, it is difficult to distinguish attack behaviors of these hosts from those of the authorized users. The carpet-bombing attack is between the elephant flow attack and the real source attack. The carpet-bombing attack is launched against consecutive internet protocol (internet protocol, IP) address segments in a scanning manner. Therefore, traffic of the carpet-bombing attack is dispersed on a plurality of target IP addresses. Traffic of attacking each target IP address is not heavy, but total traffic of attacking all target IP addresses is heavy. Generally, it is difficult to find attack rules and defend against the attack.

Therefore, in a process in which a client accesses, by using a service packet, a service provided by a service end, how to effectively defend against or mitigate a DDoS attack by an attack source against the service end becomes an urgent technical problem to be resolved.

### SUMMARY

This application provides a packet transmission method and an apparatus. The method can effectively defend against or mitigate a typical DDoS attack on the current internet.

Technical solutions provided in this application are as follows.

According to a first aspect, this application provides a packet transmission method. The method is applied to a security module of a service end, the service end is configured to provide a target service for a client, the client is a registered user of the target service, and the target service runs on at least one server in at least one cloud data center in one of a plurality of regions. The method includes: receiving a target service packet that is sent by the client and that is used to access the target service, where a destination address of the target service packet includes a verification field; verifying the destination address of the target service packet based on the verification field, to determine that the destination address of the target service packet is a preconfigured address; and sending the target service packet to the service end. The preconfigured address is an internet protocol version 6 (internet protocol version 6, IPv6) address that is configured for the client and that is used to access the target service.

According to the method provided in this application, because an IPv6 address space is huge, and many addresses are idle addresses, when the huge IPv6 address space is used to allocate an access address to the service end that provides the target service, and when an attack source attacks, in a direct DDoS carpet-bombing attack manner, the target service provided by the service end, the direct DDoS carpet-bombing attack cannot be effectively launched.

In a possible design manner, the method further includes: when the destination address of the target service packet is not the preconfigured address, and/or when the destination address of the target service packet exists in a block list, blocking the target service packet. The block list is used to record a destination address of a service packet that is forbidden to be forwarded.

In this possible design, a packet that is used to access the target service by using no preconfigured address allocated to the target service is blocked, thereby preventing an unauthorized user from accessing the target service.

In another possible design manner, the destination address of the target service packet further includes a preconfiguration field, and verifying the destination address of the target service packet based on the verification field, to determine that the destination address of the target service packet is the preconfigured address includes: obtaining a first preset rule corresponding to the preconfiguration field, where the first preset rule is used to determine a verification field in the preconfigured address based on a logical operation; determining a target verification field according to the first preset rule; and when the verification field included in the destination address of the target service packet is the same as the target verification field, determining that the destination address of the target service packet is the preconfigured address.

In this possible design, the destination address of the target service packet is verified.

In still another possible design manner, the method further includes: receiving a second preset rule when preset duration expires, where the second preset rule is a preset rule obtained by updating the first preset rule.

In this possible design, when the client periodically changes a destination address used to access the target service, the security module of the service end can periodically receive a preset rule used to verify a destination address in a service packet from the client, that is, the security module of the service end can update, in time, the preset rule used to verify the access address.

In still another possible design manner, the security module of the service end is deployed in a gateway of the service end, and the method further includes: sending the first preset rule to a forwarding node reachable to the gateway.

In this possible design, forwarding nodes close to the client can receive the preset rule used to verify the destination address in the service packet from the client, so that the forwarding nodes can forward or block the service packet from the client by performing the method described in this application, thereby filtering DDoS attack traffic at a location close to the client (that is, a source end). In this way, impact of the DDoS attack on a communication network between the client and the serving gateway can be reduced.

In still another possible design manner, the method further includes: determining that a quantity of blocked service packets sent by the same registered user through the client exceeds a preset threshold, and adding a user identifier (identifier, ID) of the same registered user to a user block list.

In this possible design, the security module of the service end can collect the user block list that records an ID of a registered user that maliciously accesses a backend service. Subsequently, network security can be ensured by discarding or isolating a packet of the malicious registered user in time. The malicious registered user may be further included in a security information system for reference by another attack defense system.

In still another possible design manner, the security module of the service end is deployed in the gateway of the service end, and sending the target service packet to the service end includes: performing network address translation (network address translation, NAT) on the destination address of the target service packet; and sending the target service packet after the NAT to the service end, where an address obtained by performing NAT on the destination address of the target service packet is an address of the service end.

In still another possible design manner, the address obtained by performing NAT on the destination address of the target service packet is an IPv6 address or an internet protocol version 4 (internet protocol version 4, IPv4) address.

In this possible design, a real IP address of the backend service can be flexibly deployed.

According to a second aspect, this application provides a packet transmission method. The method is applied to a client, the client is a registered user of a target service provided by a service end, the service end is configured to provide the target service for the client, and the target service runs on at least one server in at least one cloud data center in one of a plurality of regions. The method includes: obtaining a destination address of a to-be-sent target service packet, where the destination address is one of preconfigured addresses, and the preconfigured address is an IPv6 address that is configured for the client and that is used to access the target service; and sending the target service packet, where the target service packet is used to access the target service.

According to the method provided in this application, because an IPv6 address space is huge, and many addresses are idle addresses, when the huge IPv6 address space is used to allocate, to the client, the destination address of the service packet used to access the target service, an attack source can be effectively prevented from attacking, in a direct DDoS carpet-bombing attack manner, the target service provided by the service end. In addition, a prerequisite for the client to obtain the preconfigured address allocated to the target service is that the client is the registered user of the target service. In this way, a real source attack in a DDoS attack can be avoided.

In a possible design manner, obtaining the destination address of the to-be-sent target service packet includes: obtaining a first preset rule, where the first preset rule is used to determine a verification field in the preconfigured address based on a logical operation, and the verification field is used to verify whether the destination address of the target service packet is the preconfigured address; determining a verification field in the destination address according to the first preset rule; and obtaining the destination address of the target service packet based on the verification field.

In another possible design manner, the method further includes: receiving a second preset rule when preset duration expires, where the second preset rule is a preset rule obtained by updating the first preset rule.

In this possible design, when accessing the target service, the client periodically receives different preset rules, so that the client can periodically update a preconfigured address used as a destination address to access the target service. In this way, it is difficult for an attacker to accurately parse out an access address of the target service and attack the target service.

In still another possible design manner, before obtaining the destination address of the to-be-sent target service packet, the method further includes: obtaining an access address of a registration service by accessing a portal service of the target service, where the registration service is used to provide a user registration service for a user accessing the target service; and registering as the registered user of the target service based on the access address of the registration service.

In still another possible design manner, a portal service apparatus configured to provide the portal service is configured with at least one access address of the registration service. Obtaining the access address of the registration service by accessing the portal service of the target service includes: receiving the access address that is of the registration service and that is returned by the portal service apparatus.

In the two possible designs, before obtaining the preconfigured address allocated to the target service, the client needs to first register as the registered user of the target service. In this way, the real source attack in the DDoS attack can be avoided.

According to a third aspect, this application provides a packet transmission apparatus. The apparatus is used in a security module of a service end, the service end is configured to provide a target service for a client, the client is a registered user of the target service, and the target service runs on at least one server in at least one cloud data center in one of a plurality of regions. The apparatus includes: a receiving unit, configured to receive a target service packet that is sent by the client and that is used to access the target service, where a destination address of the target service packet includes a verification field; a processing unit, configured to verify the destination address of the target service packet based on the verification field, to determine that the destination address of the target service packet is a preconfigured address; and a sending unit, configured to send the target service packet to the service end. The preconfigured address is an IPv6 address that is configured for the client and that is used to access the target service.

In a possible design manner, the processing unit is further configured to: when the destination address of the target service packet is not the preconfigured address, and/or when the destination address of the target service packet exists in a block list, block the target service packet. The block list is used to record a destination address of a service packet that is forbidden to be forwarded.

In another possible design manner, the destination address of the target service packet further includes a preconfiguration field, and the apparatus further includes: an obtaining unit, configured to obtain a first preset rule corresponding to the preconfiguration field, where the first preset rule is used to determine a verification field in the preconfigured address based on a logical operation. The processing unit is further configured to: determine a target verification field according to the first preset rule; and when the verification field included in the destination address of the target service packet is the same as the target verification field, determine that the destination address of the target service packet is the preconfigured address.

In still another possible design manner, the receiving unit is further configured to receive a second preset rule when preset duration expires, where the second preset rule is a preset rule obtained by updating the first preset rule.

In still another possible design manner, the security module of the service end is deployed in a gateway of the service end, and the sending unit is further configured to send the first preset rule to a forwarding node reachable to the gateway.

In still another possible design manner, the processing unit is further configured to: determine that a quantity of blocked service packets sent by the same registered user through the client exceeds a preset threshold, and add a user ID of the same registered user to a user block list.

In still another possible design manner, the security module of the service end is deployed in the gateway of the service end, and the processing unit is further configured to perform NAT on the destination address of the target service packet. The sending unit is specifically configured to send the target service packet after the NAT to the service end, where an address obtained by performing NAT on the destination address of the target service packet is an address of the service end.

In still another possible design manner, the address obtained by performing NAT on the destination address of the target service packet is an IPv6 address or an IPv4 address.

It may be understood that, for beneficial effects achieved by the packet transmission apparatus provided in any one of the third aspect and the possible design manners of the third aspect, refer to technical effects of the corresponding solution provided in any one of the first aspect and the possible design manners of the first aspect. Details are not described again.

According to a fourth aspect, this application provides a packet transmission apparatus. The apparatus is used in a client, the client is a registered user of a target service provided by a service end, the service end is configured to provide the target service for the client, and the target service runs on at least one server in at least one cloud data center in one of a plurality of regions. The apparatus includes: an obtaining unit, configured to obtain a destination address of a to-be-sent target service packet, where the destination address is one of preconfigured addresses, and the preconfigured address is an IPv6 address that is configured for the client and that is used to access the target service; and a sending unit, configured to send the target service packet, where the target service packet is used to access the target service.

In a possible design manner, the obtaining unit is further configured to obtain a first preset rule, where the first preset rule is used to determine a verification field in the preconfigured address based on a logical operation, and the verification field is used to verify whether the destination address of the target service packet is the preconfigured address. The apparatus further includes a processing unit, configured to: determine a verification field in the destination address according to the first preset rule; and obtain the destination address of the target service packet based on the verification field.

In another possible design manner, the apparatus further includes a receiving unit, configured to receive a second preset rule when preset duration expires, where the second preset rule is a preset rule obtained by updating the first preset rule.

In still another possible design manner, the obtaining unit is further configured to: before obtaining the destination address of the to-be-sent target service packet, obtain an access address of a registration service by accessing a portal service of the target service. The processing unit is further configured to register as the registered user of the target service based on the access address of the registration service. The registration service is used to provide a user registration service for a user accessing the target service.

In still another possible design manner, a portal service apparatus configured to provide the portal service is configured with at least one access address of the registration service. The receiving unit is further configured to receive the access address that is of the registration service and that is returned by the portal service apparatus.

It may be understood that, for beneficial effects achieved by the packet transmission apparatus provided in any one of the fourth aspect and the possible design manners of the fourth aspect, refer to technical effects of the corresponding solution provided in any one of the second aspect and the possible design manners of the second aspect. Details are not described again.

According to a fifth aspect, this application provides a compute device. The compute device includes a memory, a communication interface, and one or more processors. The one or more processors receive or send data through the communication interface. The one or more processors are configured to read program instructions stored in the memory, to perform the method provided in any one of the first aspect and the possible design manners of the first aspect, or perform the method provided in any one of the second aspect and the possible design manners of the second aspect.

According to a sixth aspect, this application provides a compute device cluster. The compute device cluster includes at least one compute device, and each compute device includes a processor and a memory. A processor of the at least one compute device is configured to execute instructions stored in a memory of the at least one compute device, to cause the compute device cluster to perform the method provided in any one of the first aspect and the possible design manners of the first aspect, or perform the method provided in any one of the second aspect and the possible design manners of the second aspect.

According to a seventh aspect, this application provides a packet transmission system. The system includes a security module of a service end and a client. The security module of the service end is configured to perform the method provided in any one of the first aspect and the possible design manners of the first aspect. The client is configured to perform the method provided in any one of the second aspect and the possible design manners of the second aspect. In a specific design, the security module of the service end is, for example, implemented as the packet transmission apparatus provided in the third aspect or the fifth aspect, and the client is, for example, implemented as the packet transmission apparatus provided in the fourth aspect or the fifth aspect.

According to an eighth aspect, this application provides a chip. The chip includes a processor. When the processor runs program instructions or code, the chip including the processor or a device including the chip performs the method provided in any one of the first aspect and the possible design manners of the first aspect, or performs the method provided in any one of the second aspect and the possible design manners of the second aspect. For example, the chip further includes an input interface, an output interface, and a memory. The input interface, the output interface, the processor, and the memory in the chip are connected through an internal connection path of the chip. The memory in the chip is configured to store the program instructions or the code run by the processor. The input interface and the output interface in the chip are configured for connection and communication between the chip and another chip or device.

According to a ninth aspect, this application provides a computer-readable storage medium. The computer-readable storage medium is a non-volatile computer-readable storage medium, and the computer-readable storage medium includes computer program instructions. When the computer program instructions are executed by a compute device or a processor, the compute device or the processor performs the method provided in any one of the first aspect and the possible design manners of the first aspect, or performs the method provided in any one of the second aspect and the possible design manners of the second aspect.

According to a tenth aspect, this application provides a computer program product including instructions. When the instructions are run by a processor, a compute device or a processor is caused to perform the method provided in any one of the first aspect and the possible design manners of the first aspect, or perform the method provided in any one of the second aspect and the possible design manners of the second aspect.

It may be understood that any packet transmission apparatus, system, compute device cluster, computer-readable storage medium, computer program product, chip, or the like provided above may be used in the corresponding method provided above. Therefore, for beneficial effects that can be achieved by the packet transmission apparatus, the system, the compute device cluster, the computer-readable storage medium, the computer program product, the chip, or the like, refer to beneficial effects in the corresponding method. Details are not described herein again.

In this application, names of the packet transmission apparatus, the packet transmission system, and the like constitute no limitation on devices or functional modules. In actual implementation, these devices or functional modules may have other names, provided that functions of the devices or the functional modules are similar to those in this application, which falls within the protection scope of this application.

### BRIEF DESCRIPTION OF DRAWINGS

FIG. 1 is a diagram of an implementation environment of a method according to an embodiment of this application;
FIG. 2 is a diagram of another implementation environment of a method according to an embodiment of this application;
FIG. 3 is a schematic flowchart of a packet transmission method according to an embodiment of this application;
FIG. 4 is a diagram of obtaining a first address according to an embodiment of this application;
FIG. 5 is a schematic flowchart of another packet transmission method according to an embodiment of this application;
FIG. 6 is a diagram of a process in which a client registers as a registered user of a target service according to an embodiment of this application;
FIG. 7 is a diagram of a portal service access page according to an embodiment of this application;
FIG. 8 is a diagram of outputting related information on a registration page by a client according to an embodiment of this application;
FIG. 9 is a diagram of a process of a packet transmission method according to an embodiment of this application;
FIG. 10 is a diagram of a structure of a packet transmission apparatus according to an embodiment of this application;
FIG. 11 is a diagram of a structure of another packet transmission apparatus according to an embodiment of this application;
FIG. 12 is a diagram of a structure of a compute device according to an embodiment of this application;
FIG. 13 is a diagram of a structure of a compute device cluster according to an embodiment of this application; and
FIG. 14 is a diagram of a network connection of one or more compute devices in a compute device cluster according to an embodiment of this application.

### DESCRIPTION OF EMBODIMENTS

To make objectives, technical solutions, and advantages of this application clearer, the following further describes the implementations of this application in detail with reference to the accompanying drawings.

For ease of understanding, the following first explains technologies and the background in embodiments of this application.

### (1) Distributed denial of service (distributed denial of service, DDoS) attack

The DDoS attack is generally a network attack that uses proper service requests to occupy excessive service resources, causing authorized users to fail to obtain service responses.

Currently common DDoS attacks that are difficult to defend include but are not limited to the following several types:
A: Elephant flow attack: is an attack continuously accessing a large quantity of target services through one network connection. Because the elephant flow attack focuses on one network connection, it is difficult to disperse traffic of the elephant flow attack to a plurality of central processing units (central processing units, CPUs) for defense.
B: Real source attack: is launched by using many real hosts as attack sources. Therefore, it is difficult to distinguish attack behaviors of these hosts from those of the authorized users.
C: Carpet-bombing attack: is between the elephant flow attack and the real source attack. The carpet-bombing attack is launched against consecutive internet protocol (internet protocol, IP) address segments in a scanning manner. Therefore, traffic of the carpet-bombing attack is dispersed on a plurality of target IP addresses. Traffic of attacking each target IP address is not heavy, but total traffic of attacking all target IP addresses is heavy. Generally, it is difficult to find attack rules and defend against the attack.

In the current mainstream DDoS attacks, the gaming industry is attacked by about half of the total. In addition, the DDoS attacks target enterprise websites, e-commerce networks, and the like. Generally, network access characteristics of the enterprise websites are that any source IP address or user can access the websites, and the user or the source IP address that accesses the websites does not need to be registered in advance. Network access characteristics of game networks and the e-commerce networks are that a user or a source IP address needs to be registered in advance, and only a user or a source IP address that is successfully registered can access the game networks and the e-commerce networks.

### (2) Network address translation (network address translation, NAT)

The NAT is a technology used to use a private address in a local network and use a global IP address when the internet is connected.

For example, when a host in the local network sends a packet to the internet, a border device at a network border in the local network performs NAT to translate a source address of the packet into a global IP address of the local network on the internet, where the source address of the packet before the NAT is a private address of the host in the local network. For another example, when a packet from the internet is sent to a host in the local network, a border device at a network border in the local network performs NAT to translate a destination address of the packet into a private address of the host in the local network, where the destination address of the packet before the NAT is a global IP address of the local network on the internet.

### (3) Closed network

The closed network means that a relationship between nodes in the network is relatively closed, that is, the relationship between the nodes is independent and limited. In the closed network, a connection relationship between the nodes is usually determined in advance, and only specific nodes are allowed to communicate with each other. This network structure is commonly used in private networks and local area networks such as enterprise intranets and home networks.

Currently, DDoS attack defense usually needs a large quantity of CPUs to participate in analysis and processing. Therefore, DDoS attack defense and processing consume large quantities of general-purpose compute resources and network resources on both the cloud and servers. In addition, due to characteristics of internet protocol version 4 (internet protocol version 4, IPv4) addresses, it is difficult to defend against IPv4 address-based carpet-bombing attacks. In addition, the IPv4 addresses are expensive and costly.

In some related technologies, a service packet sent by a client to a service end carries a feature pre-negotiated by the client and the service end. A forwarding node identifies the feature carried in the service packet, to obtain normal service traffic through filtering, forward the normal service traffic, and block abnormal traffic, thereby defending against a DDoS attack. However, this manner needs to be implemented at an application layer. Therefore, processing costs of identifying the feature in the service packet by the forwarding node (for example, a router or a gateway) that performs the method are high.

In some other related technologies, a tunnel is established between a client and a service end. When the service end detects a DDoS attack, the tunnel between the client and the service end is migrated. Because an inner destination IP address of a service packet transmitted through the tunnel remains unchanged, this manner can ensure service continuity experience of the client. However, establishing the tunnel between the client and the service end and migrating the tunnel when the DDoS attack occurs subsequently have high requirements on a network and technical implementation is complex.

In still some other related technologies, a service end that provides a service for a client deploys an access gateway (or referred to as a serving gateway) at a plurality of regional locations through, for example, multi-cloud deployment, so that when detecting a DDoS attack, an access gateway of the service end indicates, to bypass the access gateway, a service packet that is used to access the service provided by the service end, and to access, through another access gateway, the service provided by the service end. However, this manner has complex management and high costs.

Based on this, embodiments of this application provide a packet transmission method. In the method, a plurality of internet protocol version 6 (internet protocol version 6, IPv6) addresses (denoted as preconfigured addresses) are preconfigured for a target service, whether a destination address of a target service packet that is used to access the target service is a preconfigured address pre-delivered to a client that initiates the target service packet is detected, and when it is determined that the destination address of the target service packet is the preconfigured address pre-delivered to the client that initiates the target service packet, the target service packet is normally forwarded, for example, the target service packet is sent to a service end that provides the target service. According to the method, because an IPv6 address space is huge, and many addresses are idle addresses, when the huge IPv6 address space is used to allocate a large quantity of preconfigured addresses to the service end that provides the target service, and when an attack source attacks, in a direct DDoS carpet-bombing attack manner, the target service provided by the service end, the direct DDoS carpet-bombing attack cannot be effectively launched.

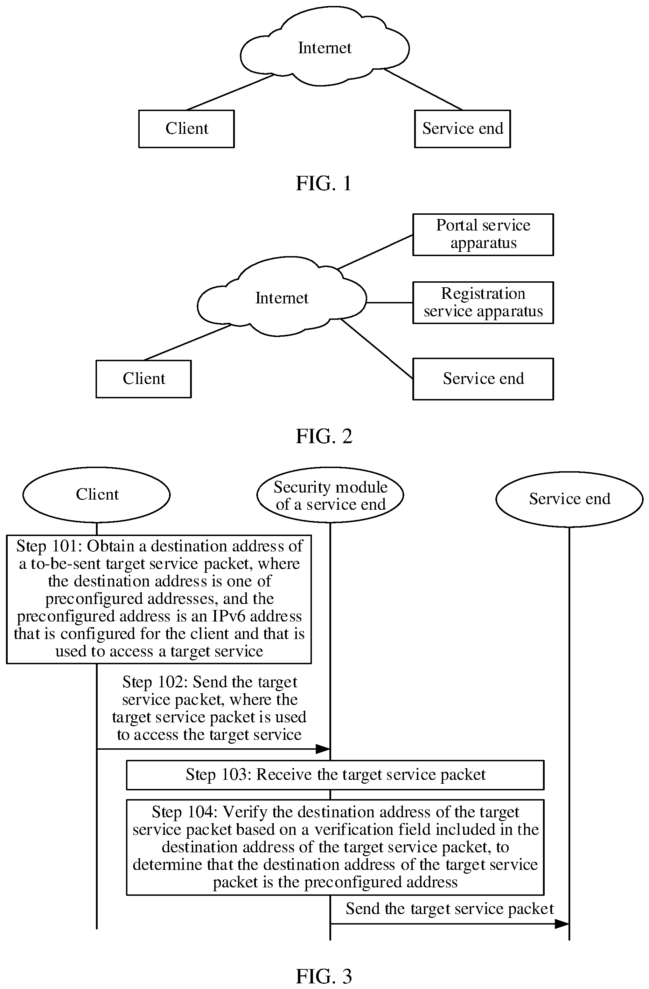

FIG. 1 is a diagram of an implementation environment of a method according to an embodiment of this application. As shown in FIG. 1, the implementation environment is implemented as a packet transmission system including a client and a service end. The client transmits a service packet to the service end through a network (for example, the internet), to access a service provided by the service end. Optionally, in FIG. 1, a network to which the client belongs may be the same as or different from a network to which the service end belongs. When in FIG. 1, the network to which the client belongs is the same as the network to which the service end belongs, it indicates that the network to which the client and the service end belong is a closed network. The method provided in embodiments of this application is applied to the system, so that in a process in which the client accesses the service end by using a service packet, when an attack source attacks, in a direct DDoS carpet-bombing attack manner, a service provided by the service end, the direct DDoS carpet-bombing attack cannot be effectively launched.

For example, the service end includes but is not limited to an application server that provides any one or more services, and the services provided by the application server include but are not limited to a game service, an e-commerce service, a media service, a social service, and the like. For another example, the client includes but is not limited to a terminal device that provides a client function, for example, a mobile phone, a notebook computer, a tablet, a desktop computer, a vehicle-mounted device, or another intelligent device.

For example, the service provided by the application server may run on at least one server in at least one cloud data center in one of a plurality of regions. This is not limited.

FIG. 2 is a diagram of another implementation environment of a method according to an embodiment of this application. With reference to FIG. 1, as shown in FIG. 2, the service end of the packet transmission system provides the service only for a registered user. Therefore, the client may first access a registration service by using a portal service (for example, a portal website of a game application) of the service (for example, a target service) provided by the service end, to register as a registered user of the service provided by the service end, and then the client accesses the target service as the registered user. When the client accesses the target service as the registered user, the method provided in embodiments of this application is applied, so that when an attack source attacks the target service in a direct DDoS carpet-bombing attack manner, the direct DDoS carpet-bombing attack cannot be effectively launched. The portal service is provided by a portal service apparatus, and the portal service apparatus is, for example, a portal server. The registration service is provided by a registration service apparatus, and the registration service apparatus is, for example, a registration server.

It should be understood that the foregoing content is example descriptions of the implementation environment of the method provided in embodiments of this application, and does not constitute a limitation on the implementation environment of the method. Persons of ordinary skill in the art may learn that, as a service requirement changes, the implementation environment of the method may be adjusted based on an application requirement. This is not enumerated in embodiments of this application.

Embodiments of this application further provide a packet transmission apparatus. The packet transmission apparatus may be implemented by using hardware and/or software. The packet transmission apparatus may be used in a security module of a service end or a client that accesses a service provided by the service end, so that the security module of the service end and the client perform corresponding steps in the following method. In an example, the service end may be the service end shown in FIG. 1 or FIG. 2, and the client may be the client shown in FIG. 1 or FIG. 2.

When the packet transmission apparatus is used in the security module of the service end, the packet transmission apparatus may be implemented as the security module deployed in the service end or a functional module in the security module. For example, the security module is a firewall installed on the service end. In this case, the packet transmission apparatus may be implemented as a functional module of the firewall.

Alternatively, when the packet transmission apparatus is used in the security module of the service end, the packet transmission apparatus may be implemented as a forwarding node that forwards a service packet from the client to the service end, or a functional module in the forwarding node. This is not limited. The forwarding node may be any node/device that has a packet forwarding processing capability. In an example, the forwarding node is a network device like a router, a switch, or a gateway on a communication link from the client to the service end, and is not limited thereto.

When the packet transmission apparatus is used in the client that accesses the service provided by the service end, the apparatus may be a terminal device configured to implement a client function, or a functional module in the terminal device. This is not limited. The terminal device includes but is not limited to a mobile phone, a notebook computer, a tablet, a desktop computer, a vehicle-mounted device, or another intelligent device.

The following describes an implementation process of the packet transmission method provided in embodiments of this application.

FIG. 3 is a schematic flowchart of a packet transmission method according to an embodiment of this application. Optionally, the method may be applied to the implementation environment shown in FIG. 1 or FIG. 2. For brief description, the following is described by using an example in which a client that accesses a service (denoted as a target service) provided by a service end and a security module of the service end perform corresponding steps of the method in this embodiment of this application. Optionally, the target service may run on at least one server in at least one cloud data center in one of a plurality of regions. As shown in FIG. 3, the method includes the following steps.

Step 101: The client obtains a destination address of a to-be-sent target service packet, where the destination address is one of preconfigured addresses, and the preconfigured address is an IPv6 address that is configured for the client and that is used to access the target service.

The client is a registered user of the target service provided by the service end. By accessing the preconfigured address, the client can access the target service provided by the service end. For example, the target service includes but is not limited to a game service, an e-commerce service, a media service, a social service, and the like.

In this embodiment of this application, the preconfigured address is an IPv6 address with a length of 128 bits (bits). Because an IPv6 address space is huge, an address space that can be allocated to the target service in the method in this embodiment of this application is huge, so that when an attack source attacks, in a direct DDoS carpet-bombing attack manner, the target service provided by the service end, the direct DDoS carpet-bombing attack cannot be effectively launched.

For any preconfigured address, the preconfigured address includes a preconfiguration field and a verification field. Therefore, when a length of the preconfiguration field is x bits, a length of the verification field is y=(128-x) bits.

In this embodiment of this application, at least one preconfiguration field is configured for the target service. In some examples, the preconfiguration field is a network prefix (for example, a network prefix whose length is 64 bits or 96 bits) of a network in which the service end that provides the target service is located, or the preconfiguration field includes a network prefix of a network in which the service end that provides the target service is located and a subnet address (for example, a subnet address whose length is 16 bits or 32 bits) of the service end in the network. This is not limited. Optionally, different preconfiguration fields configured for the target service may be used to configure, for clients located in different regions, preconfigured addresses used to access the target service.

In addition, the verification field in the preconfigured address can be obtained through calculation according to any one of the following preset rules. For example, the length of the verification field is y bits. The preset rules include but are not limited to: (1) obtaining the verification field through calculation based on y bits in a source address of the client that accesses the target service, a preset value whose length is y bits, and any logical operation algorithm; (2) obtaining the verification field through calculation based on y bits in a preconfiguration field configured for the target service, a preset value whose length is y bits, and any logical operation algorithm; and (3) obtaining the verification field through calculation based on y bits in a source address of the client that accesses the target service, y bits in a preconfiguration field configured for the target service, and any logical operation algorithm. It can be learned that the preset rule is used to determine the verification field in the preconfigured address based on a logical operation. The logical operation includes but is not limited to a logical AND operation, a logical OR operation, a logical XOR operation, or the like. The source address of the client that accesses the target service may be a 32-bit IPv4 address, or may be a 128-bit IPv6 address. This is not limited. In addition, the y bits in the source address of the client (or the preconfiguration field configured for the target service) may be most significant y bits in the source address of the client (or the preconfiguration field configured for the target service), or may be least significant y bits in the source address of the client (or the preconfiguration field configured for the target service), or may be middle y bits in the source address of the client (or the preconfiguration field configured for the target service). It should be understood that the y bits in the source address of the client (or the preconfiguration field configured for the target service) may be y consecutive bits in the source address of the client (or the preconfiguration field configured for the target service), or may be y inconsecutive bits. This is not limited. In addition, the preset value is not specifically limited in this embodiment of this application.

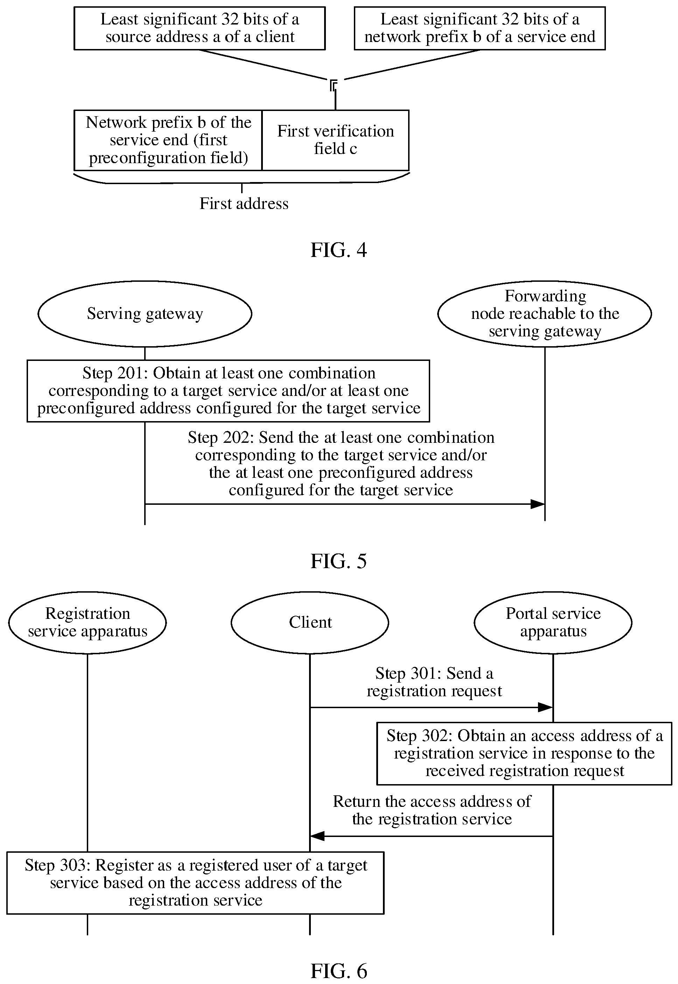

For example, the preconfigured address is used as the destination address of the target service packet. The destination address includes a first preconfiguration field configured for the target service and a first verification field obtained through calculation according to a first preset rule. FIG. 4 is a diagram of obtaining a first address. As shown in FIG. 4, when the source address of the client that accesses the target service by using the first address is a, the first preconfiguration field is a network prefix (denoted as a service end network prefix) b of the network in which the service end that provides the target service is located, a length x of b is 96 bits, a length y of the first verification field is (128-96=32) bits, and the first preset rule is obtaining the verification field through calculation based on least significant y bits in the source address of the client that accesses the target service, least significant y bits in the first preconfiguration field configured for the target service, and a logical XOR (a symbol is "⊕") operation, the first verification field c=(least significant 32 bits of a)⊕(least significant 32 bits of b), and the first address is formed by splicing b and c. It should be understood that when x is 32 bits, the length of c is also 32 bits.

In this embodiment of this application, a preset rule used to obtain a verification field in a preconfigured address through calculation and a preconfiguration field in the preconfigured address are referred to as a group of a preset rule and a preconfiguration field that have a correspondence, and are denoted as a combination. For example, the first preset rule used to obtain the first verification field in the destination address of the target service packet through calculation and the first preconfiguration field in the destination address are referred to as a first combination, and there is a correspondence between the first preset rule and the first preconfiguration field in the first combination.

Specifically, when needing to access the target service provided by the service end, the client obtains the destination address of the target service packet.

In a first possible implementation, that the client obtains the destination address of the target service packet includes: After determining that the client has registered as the registered user of the target service, the client obtains the first preset rule, determines the first verification field according to the obtained first preset rule, and determines the destination address of the target service packet based on the first verification field. The first preset rule is used to determine a verification field (for example, the first verification field) in a preconfigured address based on a logical operation, and the first verification field is used to verify whether the destination address of the target service packet is the preconfigured address. The following describes a process in which the client obtains the destination address of the target service packet in different cases (including a case 1 to a case 4) in this implementation.

Case 1: A plurality of combinations corresponding to the target service are preconfigured in the client, and each combination includes one of a plurality of preset rules and one of a plurality of preconfiguration fields configured for the target service. In this case, that the client obtains the first preset rule includes: selecting one of the plurality of preconfigured combinations according to a first policy as the first combination, determining a preset rule in the first combination as the first preset rule, and determining a preconfiguration field in the first combination as the first preconfiguration field. Then, after the client determines the first verification field according to the first preset rule, that the client determines the destination address of the target service packet based on the first verification field includes: splicing the first preconfiguration field and the first verification field, to obtain the destination address of the target service packet. For a process in which the client determines the first verification field according to the first preset rule, refer to the related descriptions in FIG. 4. Details are not described again. In addition, the first policy is not specifically limited in this embodiment of this application. For example, the first policy is a round-robin policy. For another example, the first policy includes: selecting a combination 1 in a time period 1, selecting a combination 2 in a time period 2, and the like. This is not limited thereto.

In some examples, when the client that accesses the target service and the service end that provides the target service belong to a same closed network, the client may obtain the destination address of the target service packet in the manner described in the case 1.

Case 2: A plurality of preset rules are preconfigured in the client, and a plurality of preconfiguration fields configured for the target service are preconfigured in a network control apparatus or a registration service apparatus of the network in which the service end is located, or a plurality of preconfiguration fields corresponding to a domain name of the target service are preconfigured in a domain name system (domain name system, DNS), and the plurality of preconfiguration fields corresponding to the domain name of the target service are a plurality of preconfiguration fields configured for the target service. The network control apparatus is a network control apparatus of the network in which the service end that provides the target service is located. The registration service apparatus is configured to provide a user registration service for one or more services including the target service. In this case, that the client obtains the first preset rule includes: selecting one of the plurality of preconfigured preset rules according to a second policy as the first preset rule. Then, the client sends an address obtaining request to the DNS, where the request carries the domain name of the target service and the first preset rule. In this way, the DNS finds, based on the domain name of the target service carried in the address obtaining request, the plurality of preconfiguration fields corresponding to the domain name, selects one of the plurality of preconfiguration fields according to a third policy as the first preconfiguration field, and returns the first preconfiguration field to the client. In addition, the DNS further sends the selected first preconfiguration field and the received first preset rule as the first combination to a gateway of the service end that provides the target service. Alternatively, the client sends an address obtaining request to the network control apparatus (or the registration service apparatus), where the request carries an identifier (identifier, ID) of the target service and the first preset rule. In this way, the network control apparatus (or the registration service apparatus) finds, based on the ID of the target service carried in the address obtaining request, the plurality of preconfiguration fields configured for the target service, selects one of the plurality of preconfiguration fields according to a third policy as the first preconfiguration field, and returns the first preconfiguration field to the client. In addition, the network control apparatus (or the registration service apparatus) further sends the selected first preconfiguration field and the received first preset rule as the first combination to a gateway of the service end that provides the target service. In response, the client receives the first preconfiguration field returned by the DNS or the network control apparatus (or the registration service apparatus), and the gateway of the service end receives the first combination. Then, after the client determines the first verification field according to the first preset rule, that the client determines the destination address of the target service packet based on the first verification field includes: splicing the first preconfiguration field and the first verification field, to obtain the destination address of the target service packet. For descriptions of the second policy and the third policy, refer to the descriptions of the first policy. Details are not described herein. It should be understood that the second policy and the third policy may be the same as or different from the first policy. This is not limited. For example, the second policy or the third policy is a round-robin policy. For another example, the second policy includes: selecting a preset rule 1 in a time period 1, selecting a preset rule 2 in a time period 2, and the like. For another example, the third policy includes: selecting a preconfiguration field 1 in the time period 1, selecting a preconfiguration field 2 in the time period 2, and the like. For another example, the third policy includes: selecting the preconfiguration field 1 when a location region of the client is a region 1, selecting the preconfiguration field 2 when the location region of the client is a region 2, and the like.

Case 3: A plurality of preconfiguration fields configured for the target service are preconfigured in the client, and a plurality of preset rules are preconfigured in a network control apparatus or a registration service apparatus of the network in which the service end is located, or a plurality of preset rules corresponding to a domain name of the target service are preconfigured in a DNS. In this case, that the client obtains the first preset rule includes: The client selects one of the plurality of preconfigured preconfiguration fields according to a third policy as the first preconfiguration field. Then, the client sends an address obtaining request to the DNS, where the request carries the domain name of the target service and the first preconfiguration field. In this way, the DNS finds, based on the domain name of the target service carried in the address obtaining request, the plurality of preset rules corresponding to the domain name, selects one of the plurality of preset rules according to a second policy as the first preset rule, and returns the first preset rule to the client. In addition, the DNS further sends the selected first preset rule and the received first preconfiguration field as the first combination to a gateway of the service end that provides the target service. Alternatively, the client sends an address obtaining request to the network control apparatus (or the registration service apparatus), where the request carries the first preconfiguration field. In this way, in response to the address obtaining request, the network control apparatus (or the registration service apparatus) selects one of the plurality of preconfigured preset rules according to a second policy as the first preset rule, and returns the first preset rule to the client. In addition, the network control apparatus (or the registration service apparatus) further sends the selected first preset rule and the received first preconfiguration field as the first combination to a gateway of the service end that provides the target service. In response, the client receives the first preset rule returned by the DNS or the network control apparatus (or the registration service apparatus), and the gateway of the service end receives the first combination. Then, after the client determines the first verification field according to the received first preset rule, that the client determines the destination address of the target service packet based on the first verification field includes: splicing the first preconfiguration field and the first verification field, to obtain the destination address of the target service packet. For descriptions of the second policy and the third policy, refer to the foregoing descriptions. Details are not described herein.

Case 4: A plurality of combinations corresponding to the target service are preconfigured in a network control apparatus, a registration service apparatus, or a DNS of the network in which the service end is located, and each combination includes one of a plurality of preset rules and one of a plurality of preconfiguration fields configured for the target service. In this case, that the client obtains the first preset rule includes: The client sends an address obtaining request to the DNS, where the request carries a domain name of the target service. In this way, the DNS finds, based on the domain name of the target service carried in the address obtaining request, the plurality of combinations corresponding to the target service represented by the domain name, then selects one of the plurality of combinations according to a first policy as the first combination, and sends the first combination to the client and a gateway of the service end that provides the target service. Alternatively, the client sends an address obtaining request to the network control apparatus (or the registration service apparatus), where the request carries an ID of the target service. In this way, the network control apparatus (or the registration service apparatus) finds, based on the ID of the target service carried in the address obtaining request, the plurality of combinations corresponding to the target service represented by the ID, then selects one of the plurality of combinations according to a first policy as the first combination, and sends the first combination to the client and a gateway of the service end that provides the target service. In response, both the client and the gateway of the service end receive the first combination sent by the DNS or the network control apparatus (or the registration service apparatus). In this way, the client determines a preconfiguration field in the received first combination as the first preconfiguration field, and determines a preset rule in the first combination as the first preset rule. Then, after the client determines the first verification field according to the first preset rule, that the client determines the destination address of the target service packet based on the first verification field includes: splicing the first preconfiguration field and the first verification field, to obtain the destination address of the target service packet. For descriptions of the first policy, refer to the foregoing descriptions. Details are not described herein.

In a second possible implementation, a plurality of preconfigured addresses configured for the target service are preconfigured in the client, and the plurality of preconfigured addresses may be a plurality of discrete IPv6 addresses, or may be one or more segments of consecutive IPv6 addresses. In this case, that the client obtains the destination address of the target service packet includes: After determining that the client has registered as the registered user of the target service, the client selects one of the plurality of preconfigured addresses according to a fourth policy as the destination address of the target service packet. The fourth policy may be the same as or different from the first policy, the second policy, and the third policy (for example, the fourth policy is a random selection policy). For detailed descriptions, refer to the foregoing descriptions. Details are not described again. In some examples, when the client that accesses the target service and the service end that provides the target service belong to a same closed network, the client may obtain the destination address of the target service packet in this implementation.

In a third possible implementation, that the client obtains the destination address of the target service packet includes: After determining that the client has registered as the registered user of the target service, the client directly obtains the destination address of the target service packet from a DNS, a network control apparatus, or a registration service apparatus. The following describes a process in which the client directly obtains the destination address of the target service packet from the DNS, the network control apparatus, or the registration service apparatus in different cases (including a case 5 to a case 7) in this implementation.

Case 5: A plurality of preconfigured addresses configured for the target service are preconfigured in the DNS, the network control apparatus, or the registration service apparatus, and the plurality of preconfigured addresses may be a plurality of discrete IPv6 addresses, or may be one or more segments of consecutive IPv6 addresses. This is not limited thereto. In this case, that the client directly obtains the destination address of the target service packet from the DNS, the network control apparatus, or the registration service apparatus includes: The client sends an address obtaining request to the DNS, where the request carries a domain name of the target service. In this way, the DNS finds, based on the domain name carried in the address obtaining request, the plurality of preconfigured addresses configured for the target service represented by the domain name, selects one of the plurality of preconfigured addresses according to a fourth policy as the destination address of the target service packet, returns the destination address to the client, and sends the preconfigured address that is used as the destination address of the target service packet to a gateway of the service end that provides the target service. Alternatively, the client sends an address obtaining request to the network control apparatus (or the registration service apparatus), where the request carries an ID of the target service. In this way, the network control apparatus (or the registration service apparatus) finds, based on the ID of the target service carried in the address obtaining request, the plurality of preconfigured addresses configured for the target service represented by the ID, selects one of the plurality of preconfigured addresses according to a fourth policy as the destination address of the target service packet, returns the destination address to the client, and sends the preconfigured address that is used as the destination address of the target service packet to a gateway of the service end that provides the target service. In response, both the client and the gateway of the service end receive the preconfigured address that is sent by the DNS, the network control apparatus, or the registration service apparatus and that is used as the destination address of the target service packet.

Case 6: A plurality of combinations corresponding to the target service are preconfigured in the DNS, the network control apparatus, or the registration service apparatus, and each combination includes one of a plurality of preset rules and one of a plurality of preconfiguration fields configured for the target service. In this case, that the client directly obtains the destination address of the target service packet from the DNS, the network control apparatus, or the registration service apparatus includes: The client sends an address obtaining request to the DNS, where the request carries a domain name of the target service. In this way, the DNS finds, based on the domain name carried in the address obtaining request, the plurality of combinations corresponding to the target service represented by the domain name, and selects one of the plurality of combinations according to a first policy as the first combination. Then, the DNS determines the first verification field according to the first preset rule in the first combination, and splices the first verification field and the first preconfiguration field in the first combination to obtain the destination address of the target service packet. Then, the DNS returns the destination address to the client, and the DNS further sends the first combination or the destination address to a gateway of the service end that provides the target service. Alternatively, the client sends an address obtaining request to the network control apparatus (or the registration service apparatus), where the request carries an ID of the target service. In this way, the network control apparatus (or the registration service apparatus) finds, based on the ID of the target service carried in the address obtaining request, the plurality of combinations corresponding to the target service represented by the ID, and selects one of the plurality of combinations according to a first policy as the first combination. Then, the network control apparatus (or the registration service apparatus) determines the first verification field according to the first preset rule in the first combination, and splices the first verification field and the first preconfiguration field in the first combination to obtain the destination address of the target service packet. Then, the network control apparatus (or the registration service apparatus) returns the destination address to the client, and the network control apparatus (or the registration service apparatus) further sends the first combination or the destination address to a gateway of the service end that provides the target service. In response, the client receives the destination address returned by the DNS, the network control apparatus, or the registration service apparatus, and the gateway of the service end receives the first combination or the destination address sent by the DNS, the network control apparatus, or the registration service apparatus.

Case 7: Each combination corresponding to the target service includes a preset rule and a preconfiguration field. For any combination, a preset rule and a preconfiguration field in the combination are referred to as two elements (denoted as a first element and a second element) in the combination. In this case, when a plurality of first elements are preconfigured in the client, and a plurality of second elements are preconfigured in the DNS, the network control apparatus, or the registration service apparatus, that the client directly obtains the destination address of the target service packet from the DNS, the network control apparatus, or the registration service apparatus includes: The client selects one of the plurality of preconfigured first elements according to a fifth policy. In an example, the client then sends an address obtaining request to the DNS, where the request carries a domain name of the target service and the first element selected by the client. In this way, the DNS finds, based on the domain name carried in the address obtaining request, a plurality of second elements corresponding to the target service represented by the domain name, and selects one of the plurality of second elements according to a sixth policy. Then, the DNS determines the destination address of the target service packet based on the first combination including the received first element and the selected second element. Then, the DNS returns the destination address to the client, and the DNS further sends the first combination or the destination address to a gateway of the service end that provides the target service. In another example, the client sends an address obtaining request to the network control apparatus (or the registration service apparatus), where the request carries an ID of the target service and the first element selected by the client. In this way, the network control apparatus finds, based on the ID of the target service carried in the address obtaining request, a plurality of second elements corresponding to the target service represented by the ID, and selects one of the plurality of second elements according to a sixth policy. Then, the network control apparatus (or the registration service apparatus) determines the destination address of the target service packet based on the first combination including the received first element and the selected second element. Then, the network control apparatus (or the registration service apparatus) returns the destination address to the client, and the network control apparatus (or the registration service apparatus) further sends the first combination or the destination address to a gateway of the service end that provides the target service. In response, the client receives the destination address returned by the DNS, the network control apparatus, or the registration service apparatus, and the gateway of the service end receives the first combination or the destination address sent by the DNS, the network control apparatus, or the registration service apparatus. For detailed descriptions of the fifth policy and the sixth policy, refer to the foregoing descriptions of the first policy, the second policy, the third policy, and the fourth policy. Details are not described again.

It should be understood that, in the first possible implementation, when the first preset rule obtained by the client is the first preset rule received from the DNS, the network control apparatus, or the registration service apparatus, the client may further receive a second preset rule when preset duration expires, where the second preset rule is a preset rule obtained by updating the first preset rule. Alternatively, when the first preconfiguration field obtained by the client is the first preconfiguration field received from the DNS, the network control apparatus, or the registration service apparatus, the client may further receive a second preset rule and/or a second preconfiguration field when preset duration expires. The second preset rule is a preset rule obtained by updating the first preset rule, and the second preconfiguration field is a field different from the first preconfiguration field. Then, the client may determine a second verification field according to the second preset rule, and determine another destination address of the target service packet based on the second verification field and the second preconfiguration field. A value of the preset duration is not specifically limited in this embodiment of this application.

In this way, when periodically receiving a preset rule and/or a preconfiguration field at an interval of the preset duration, the client can periodically obtain different preconfigured addresses used to access the target service. In this way, when accessing the target service, the client can periodically update the preconfigured address that is used as the destination address to access the target service. In this way, it is difficult for an attacker to accurately parse out an access address of the target service and attack the target service.

In the second possible implementation, when the client obtains the destination address of the target service packet from the plurality of preconfigured addresses preconfigured in the client, and when preset duration expires, the client obtains another destination address of the target service packet from the plurality of preconfigured addresses preconfigured in the client. In the third possible implementation, when the client directly obtains the destination address of the target service packet from the DNS, the network control apparatus, or the registration service apparatus, and when preset duration expires, the client obtains another destination address of the target service packet from the DNS, the network control apparatus, or the registration service apparatus.

In this way, when periodically directly obtaining, at an interval of the preset duration, a preconfigured address used to access the target service, the client can periodically obtain different preconfigured addresses used to access the target service. In this way, when accessing the target service, the client can periodically update the preconfigured address that is used as the destination address to access the target service. In this way, it is difficult for an attacker to accurately parse out an access address of the target service and attack the target service.

It should be noted that each time the client obtains, from another apparatus/device (for example, the DNS, the network control apparatus, or the registration service apparatus), a preconfigured address used to access the target service, and a plurality of preconfigured addresses used to access the target service are preconfigured in the another apparatus/device, the another apparatus/device also sends the preconfigured address sent to the client to the gateway of the service end that provides the target service. Each time the client obtains, from another apparatus/device, a preconfigured address used to access the target service, and a preset rule and/or a preconfiguration field that are/is used to determine the preconfigured address are/is preconfigured in the another apparatus/device, the another apparatus/device also sends the preconfigured address sent to the client to the gateway of the service end that provides the target service, or the another apparatus/device also sends a combination including the preset rule and/or the preconfiguration field that are/is sent to the client to the gateway of the service end that provides the target service. For detailed descriptions, refer to related descriptions in the "first possible implementation" to the "third possible implementation". Details are not described again.

In a fourth possible implementation, when needing to access the target service for the first time, the client needs to first obtain an access address of a registration service of the target service, and register as the registered user of the target service by using the registration service. Then, a registration service apparatus configures and actively delivers the destination address of the target service packet for the client that has become the registered user of the target service. Alternatively, the registration service apparatus indicates a DNS or a network control apparatus to configure and actively deliver the destination address of the target service packet for the client that has become the registered user of the target service. In response, the client can obtain the destination address of the target service packet delivered by the registration service apparatus, the DNS, or the network control apparatus. The registration service apparatus is configured to provide a user registration service for one or more services including the target service. For example, the registration service apparatus is a registration server that provides a user registration function for the service. For a detailed process in which the client obtains the access address of the registration service and registers as the registered user of the target service by using the registration service, refer to the following descriptions. Details are not described herein. In this way, the preconfigured address of the target service is delivered only to the registered user, so that a real source attack in a DDoS attack can be avoided. An example in which the registration service apparatus actively configures and delivers the destination address of the target service packet for the client is used below to describe processes in which the registration service apparatus delivers the destination address of the target service packet in the following different cases (including a case 8 to a case 10).

Case 8: A plurality of preconfigured addresses configured for the target service are preconfigured in the registration service apparatus, so that after registering the client as the registered user of the target service, the registration service apparatus selects one of the plurality of preconfigured addresses according to a fourth policy as the destination address of the target service packet, sends the destination address to the client, and sends the destination address to a gateway of the service end that provides the target service. In response, the client and the gateway of the service end receive the destination address of the target service packet used to access the target service.

Optionally, after registering the client as the registered user of the target service, the registration service apparatus may periodically select different preconfigured addresses from the plurality of preconfigured addresses according to the fourth policy as destination addresses of the target service packet, and send the destination addresses to the client and the gateway of the service end. In response, the client and the gateway of the service end may periodically receive different preconfigured addresses used to access the target service. In this way, when needing to access the target service, the client determines a newly received preconfigured address as the destination address of the target service packet.

Case 9: A plurality of combinations corresponding to the target service are preconfigured in the registration service apparatus, and each combination includes one of a plurality of preset rules and one of a plurality of preconfiguration fields configured for the target service. In this case, after registering the client as the registered user of the target service, the registration service apparatus selects, according to a first policy, one of the plurality of combinations corresponding to the target service as a target combination (for example, the first combination), determines, based on a preset rule and a preconfiguration field in the target combination, a preconfigured address as the destination address of the target service packet, and sends the preconfigured address to the client and a gateway of the service end that provides the target service. In response, the client and the gateway of the service end receive a preconfigured address used to access the target service. For a process in which the registration service apparatus determines the preconfigured address based on the preset rule and the preconfiguration field in the target combination, refer to related descriptions of determining the destination address of the target service packet in FIG. 4. Details are not described again.

Optionally, after registering the client as the registered user of the target service, alternatively, the registration service apparatus may periodically determine different target combinations according to the first policy, determine, based on a preset rule and a preconfiguration field in a target combination determined in each periodicity, a preconfigured address that is used as the destination address of the target service packet, and send the preconfigured address determined in each periodicity to the client and the gateway of the service end that provides the target service. In response, the client and the gateway of the service end periodically receive the preconfigured address that is sent by the registration service apparatus and that is used to access the target service. In this way, when needing to access the target service, the client determines a newly received preconfigured address as the destination address of the target service packet.

Case 10: A plurality of combinations corresponding to the target service are preconfigured in the registration service apparatus, and each combination includes one of a plurality of preset rules and one of a plurality of preconfiguration fields configured for the target service. In this case, after registering the client as the registered user of the target service, the registration service apparatus selects, according to a first policy, one of the plurality of combinations corresponding to the target service as a target combination (for example, the first combination), and sends the target combination to the client and a gateway of the service end that provides the target service. In response, the client and the gateway of the service end receive the target combination. Then, the client may determine a verification field according to a preset rule in the received target combination, and splice the verification field and a preconfiguration field in the target combination, to obtain a preconfigured address used to access the target service. The preconfigured address is used as the destination address of the target service packet.

Optionally, after registering the client as the registered user of the target service, alternatively, the registration service apparatus may periodically select, according to the first policy, different target combinations from the plurality of combinations corresponding to the target service, and send a target combination selected in each periodicity to the client and the gateway of the service end that provides the target service. In response, the client and the gateway of the service end periodically receive different target combinations. In this way, when needing to access the target service, the client determines a newly received target combination as the first combination, and determines the destination address of the target service packet based on the first preconfiguration field and the first preset rule in the first combination.

It may be understood that, in a scenario in which the service end provides the target service only for the registered user of the target service, when the registration service apparatus periodically sends the preconfigured address and/or the combination including the preset rule and the preconfiguration field to the client, a specific value of periodicity duration is not limited in this embodiment of this application.

It can be learned from the foregoing that when the service end provides the service only for the registered user of the target service, different registered users obtain different preconfigured addresses that are used as destination addresses of the target service packet. Therefore, even if a large quantity of registered users access the target service at the same time, because the registered users obtain different preconfigured addresses used to access the target service, each of the registered users establishes a network connection (for example, a transmission control protocol (transmission control protocol, TCP) connection or a user datagram protocol (user datagram protocol, UDP) connection) with the service end that provides the target service, so that traffic of accessing the target service can be dispersed on network connections between different registered users and the service end that provides the target service. In this way, the service end can disperse, to a plurality of CPUs for concurrent processing, traffic that is of accessing the target service but is on different network connections, to mitigate an elephant flow attack in the DDoS attack.

Optionally, in some embodiments, when obtaining the destination address of the target service packet, the client further obtains a destination port, a communication protocol type, and/or the like that are/is used to access the target service. The destination port and/or the communication protocol type correspond/corresponds to the destination address of the target service packet. The following describes, by using an example 1 to an example 4, a process in which the client obtains the destination port and/or the communication protocol type that correspond/corresponds to the destination address of the target service packet.

Example 1: In addition to a preset rule and a preconfiguration field configured for the target service, each of the plurality of combinations that are preconfigured in the client and that correspond to the target service further includes a port and/or a communication protocol type that are/is configured for the target service. In this way, when selecting the first combination from the preconfigured combinations, the client may determine a port in the first combination as the destination port corresponding to the destination address of the target service packet, and determine a communication protocol type in the first combination as the communication protocol type corresponding to the destination address of the target service packet.

Example 2: A corresponding port and/or a corresponding communication protocol type are/is configured in each of the plurality of preconfigured addresses preconfigured in the client. In this way, when selecting the destination address of the target service packet from the preconfigured addresses, the client can determine the port and/or the communication protocol type that correspond/corresponds to the destination address of the target service packet.

Example 3: In addition to a preset rule and a preconfiguration field configured for the target service, each of the plurality of combinations that are preconfigured in the DNS, the network control apparatus, the registration service apparatus, and the like and that correspond to the target service further includes a port and/or a communication protocol type that are/is configured for the target service. In this way, the client may obtain, from the DNS, the network control apparatus, the registration service apparatus, and the like, a combination preconfigured in the devices, for example, the first combination, so that the client determines a port in the first combination as the destination port corresponding to the destination address of the target service packet, and determines a communication protocol type in the first combination as the communication protocol type corresponding to the destination address of the target service packet.

Example 4: A corresponding port and/or a corresponding communication protocol type are/is configured in each of the plurality of preconfigured addresses preconfigured in the DNS, the network control apparatus, the registration service apparatus, and the like. In this way, when obtaining, from the DNS, the network control apparatus, the registration service apparatus, and the like, a preconfigured address preconfigured in the devices as the destination address of the service packet, the client obtains, from the DNS, the network control apparatus, the registration service apparatus, and the like, a port and/or a communication protocol type that correspond/corresponds to the preconfigured address.

It should be noted that the foregoing example 1 to example 4 are merely limited examples for description, and do not constitute a limitation on the protection scope of the examples of this application. Any manner that can cause the client to obtain a port and/or a communication protocol type that correspond/corresponds to a preconfigured address, or any manner that can cause the client to obtain a combination that includes a preset rule and a preconfiguration field and further includes a port and/or a communication protocol type falls within the protection scope of embodiments of this application.

Step 102: The client sends the target service packet, where the target service packet is used to access the target service.

The client first generates the target service packet based on service content/data and the newly obtained destination address of the target service packet, and sends the target service packet. Because the destination address of the target service packet is one of preconfigured addresses configured for the target service, the target service packet is used to access the target service.

Optionally, when the client further obtains, in step 101, the destination port and/or the communication protocol type that correspond/corresponds to the destination address of the target service packet, an IP header of the target service packet further includes the destination port and/or the communication protocol type.

For example, the client sends the target service packet through a communication interface of the client.

Step 103: The security module of the service end receives the target service packet sent by the client.

For example, the security module of the service end is implemented by the gateway (denoted as a serving gateway) deployed on the service end. In response to step 102, the serving gateway receives, through a communication interface of the serving gateway, the target service packet sent by the client.

Step 104: The security module of the service end verifies the destination address of the target service packet based on the verification field included in the destination address of the target service packet, to determine that the destination address of the target service packet is the preconfigured address, and sends the target service packet to the service end.

For detailed descriptions of the preconfigured address, refer to related descriptions in step 101. Details are not described again.

For example, the security module of the service end is implemented by the serving gateway. In this embodiment of this application, the serving gateway pre-obtains at least one combination corresponding to the target service, and/or the serving gateway pre-obtains at least one preconfigured address configured for the target service. Each combination corresponding to the target service includes one of a plurality of preset rules and one of a plurality of preconfiguration fields configured for the target service. A set including a plurality of preconfigured addresses pre-obtained by the serving gateway is referred to as an allow list.

For example, in some possible cases, when a plurality of combinations corresponding to the target service are preconfigured in the client, for example, in the foregoing case 1, the plurality of combinations are also preconfigured (for example, manually configured) in the service end. In some other possible cases, for example, in the foregoing case 2 to case 10, the serving gateway can receive a combination or a preconfigured address that corresponds to the target service and that is sent by the DNS, the network control apparatus, or the registration service apparatus. For detailed descriptions, refer to related descriptions of the foregoing case 2 to case 10. In still some other possible cases, when a plurality of preconfigured addresses configured for the target service are preconfigured in the client, for example, in the foregoing case described in the "second possible implementation", the plurality of preconfigured addresses are also preconfigured (for example, manually configured) in the serving gateway.

Optionally, when the client further obtains, in step 101, the destination port and/or the communication protocol type that correspond/corresponds to the destination address of the target service packet, in addition to the preconfiguration field and the preset rule that have a correspondence, each of the at least one combination that corresponds to the target service and that is pre-obtained by the serving gateway further includes a corresponding port and/or a corresponding communication protocol type. When pre-obtaining the preconfigured address configured for the target service, the serving gateway also obtains a port and/or a communication protocol type that are/is configured for the preconfigured address correspondingly.

In an example, in some possible cases, for example, in the foregoing case described in the example 1, a combination that is the same as a combination preconfigured in the client is preconfigured in the serving gateway, and each combination includes a preset rule, a preconfiguration field configured for the target service, and a port and/or a communication protocol type. In some other possible cases, for example, in the foregoing case described in the example 2, a preconfigured address that is the same as a preconfigured address preconfigured in the client is preconfigured in the serving gateway, and a corresponding port and/or a corresponding communication protocol type are/is further configured in each preconfigured address. In still some other possible cases, for example, in the foregoing case described in the example 3, when the client obtains a combination from the DNS, the network control apparatus, the registration service apparatus, or the like, the DNS, the network control apparatus, the registration service apparatus, or the like further delivers the combination to the serving gateway, so that the serving gateway obtains the combination. In still some other possible cases, for example, in the foregoing case described in the example 4, when the client obtains a preconfigured address and a port and/or a communication protocol type that correspond/corresponds to the preconfigured address from the DNS, the network control apparatus, the registration service apparatus, or the like, the DNS, the network control apparatus, the registration service apparatus, or the like further delivers the preconfigured address and the port and/or the communication protocol type that correspond/corresponds to the preconfigured address to the serving gateway.

Specifically, after receiving the target service packet, the serving gateway first extracts the destination address of the target service packet. It should be understood that the destination address of the target service packet received by the security module of the service end includes the verification field and the preconfiguration field. For ease of description, the following provides descriptions by using an example in which the verification field included in the destination address of the target service packet is the first verification field described above, and the preconfiguration field included in the destination address of the target service packet is the first preconfiguration field described above.

Then, in a possible implementation, the serving gateway obtains the first preset rule corresponding to the first preconfiguration field included in the destination address of the target service packet, where the first preset rule is used to determine a verification field in the preconfigured address based on a logical operation. Specifically, the serving gateway pre-obtains at least one combination corresponding to the target service. Therefore, after extracting the destination address of the target service packet from the received target service packet, the serving gateway traverses, based on the first preconfiguration field in the destination address of the target service packet, the combination pre-obtained by the serving gateway, to find the first combination including the first preconfiguration field, where a preset rule in the first combination is the first preset rule corresponding to the first preconfiguration field. Then, the serving gateway obtains a target verification field through calculation according to the first preset rule. The serving gateway compares the target verification field obtained through calculation with the first verification field included in the destination address of the target service packet, and processes the target service packet based on a comparison result (denoted as a first comparison result). Optionally, when the client further obtains, in step 101, the destination port and/or the communication protocol type that correspond/corresponds to the destination address of the target service packet, the serving gateway further compares the destination port included in the target service packet with a destination port in the first combination, compares the communication protocol type included in the target service packet with a communication protocol type in the first combination, and processes the target service packet based on a comparison result (denoted as a second comparison result) and the first comparison result.

When the first comparison result indicates that the target verification field obtained by the serving gateway through calculation is the same as the first verification field included in the destination address of the target service packet, the serving gateway determines that the destination address of the target service packet is the preconfigured address configured for the target service. In this case, the serving gateway may determine that the target service packet is a secure service packet. Optionally, when the client further obtains, in step 101, the destination port and/or the communication protocol that correspond/corresponds to the destination address of the target service packet, if the first comparison result indicates that the target verification field obtained by the serving gateway through calculation is the same as the first verification field carried in the destination address of the target service packet, and the second comparison result indicates that the destination port included in the target service packet is the same as the destination port in the first combination, and indicates that the communication protocol type included in the target service packet is the same as the communication protocol type in the first combination, the serving gateway determines that the target service packet is a secure service packet. Then, the serving gateway forwards the target service packet to the service end. Optionally, the serving gateway further adds the destination address of the target service packet to the allow list, so that when subsequently receiving a service packet whose destination address is the destination address of the target service packet, the serving gateway directly queries the allow list, and forwards the service packet to the service end when the allow list includes the destination address of the target service packet. Optionally, when the client further obtains, in step 101, the destination port and/or the communication protocol that correspond/corresponds to the destination address of the target service packet, the serving gateway further adds, to the allow list, a triplet including the destination address of the target service packet, and the destination port and the communication protocol type that correspond to the destination address of the target service packet, so that the serving gateway directly queries the allow list subsequently based on a triplet of a received service packet, and forwards the service packet to the service end when the allow list includes the triplet.

When the first comparison result indicates that the target verification field obtained by the serving gateway through calculation is different from the first verification field included in the destination address of the target service packet, the serving gateway determines that the destination address of the target service packet is not the preconfigured address configured for the target service. In this case, the serving gateway determines that the target service packet is not a secure service packet. Optionally, when the client further obtains, in step 101, the destination port and/or the communication protocol type that correspond/corresponds to the destination address of the target service packet, if the first comparison result indicates that the target verification field obtained by the serving gateway through calculation is different from the first verification field included in the destination address of the target service packet, and/or the second comparison result indicates that the destination port included in the target service packet is different from the destination port in the first combination, and/or the second comparison result indicates that the communication protocol type included in the target service packet is different from the communication protocol type in the first combination, the serving gateway determines that the target service packet is not a secure service packet. Then, the serving gateway blocks the target service packet. Blocking the target service packet herein includes: discarding the target service packet; or forwarding the target service packet to a back-end network security apparatus (for example, a honeypot node) configured to collect attack information. In this way, the network security apparatus can obtain, by parsing the target service packet, attack features and related information related to a network attack, and subsequently apply the attack features and the related information related to the network attack to a network security policy and the like. Details are not described again.

In another possible implementation, the serving gateway pre-obtains the preconfigured address configured for the target service, that is, the allow list including a plurality of preconfigured addresses is configured in the serving gateway. In this case, after extracting the destination address of the target service packet from the received target service packet, the serving gateway traverses the allow list based on the destination address of the target service packet, to determine whether the destination address of the target service packet exists in the allow list.

When determining that the destination address of the target service packet exists in the allow list, the serving gateway determines that the destination address of the target service packet is the preconfigured address configured for the target service. In this case, the serving gateway may determine that the target service packet is a secure service packet, and then the serving gateway forwards the target service packet to the service end. Optionally, when the service end further pre-obtains the port and/or the communication protocol type that are/is configured correspondingly for the preconfigured address configured for the target service, the allow list includes at least one triplet that includes a preconfigured address, and an obtained port and/or communication protocol type that correspond/corresponds to the preconfigured address. Therefore, when the service end determines that the triplet carried in the target service packet exists in the allow list, the serving gateway forwards the target service packet.

In some embodiments, when the serving gateway determines that the destination address of the target service packet does not exist in the allow list, the serving gateway may directly determine that the destination address of the target service packet is not the preconfigured address configured for the target service. In this case, the serving gateway blocks the target service packet. Alternatively, when the serving gateway determines that the triplet carried in the target service packet does not exist in the allow list, the serving gateway may directly determine that the triplet carried in the target service packet is not a triplet configured for the target service. In this case, the serving gateway blocks the target service packet.

In some other embodiments, the serving gateway further pre-obtains at least one combination corresponding to the target service. In this case, after determining that the destination address of the target service packet or the triplet carried in the target service packet does not exist in the allow list, the serving gateway may further traverse, based on the first preconfiguration field included in the destination address of the target service packet extracted from the target service packet, the combination pre-obtained by the serving gateway, to query whether the first combination including the first preconfiguration field exists in the at least one pre-obtained combination corresponding to the target service, where a preset rule in the first combination is the first preset rule corresponding to the first preconfiguration field. Alternatively, the serving gateway may traverse, based on the first preconfiguration field, the destination port, and the communication protocol type in the destination address of the target service packet extracted from the target service packet, the combination pre-obtained by the serving gateway, to determine whether the first combination including the first preconfiguration field, the destination port, and the communication protocol type exists in the at least one pre-obtained combination corresponding to the target service, where a preset rule in the first combination is the first preset rule corresponding to the first preconfiguration field. When the serving gateway determines that the first combination does not exist in the at least one pre-obtained combination corresponding to the target service, the serving gateway blocks the target service packet. When determining that the first combination exists in the at least one pre-obtained combination corresponding to the target service, the serving gateway obtains the target verification field through calculation according to the first preset rule in the first combination. Then, the serving gateway compares the target verification field obtained through calculation with the first verification field carried in the destination address of the target service packet, and processes the target service packet based on a comparison result, for example, forwards the target service packet or blocks the target service packet. For detailed descriptions, refer to the foregoing descriptions. Details are not described again.

In some embodiments provided in this application, a block list is further configured for the serving gateway, and the block list is used to record a destination address of a service packet that is forbidden to be forwarded. For example, the address in the block list may be an IP address collected based on collected network attack information, or may be a destination address of a service packet that is historically blocked by the serving gateway. For example, the serving gateway continuously blocks, a plurality of times according to the foregoing implementation, a service packet sent to a destination address. When a quantity of blocking times exceeds a threshold, the serving gateway adds the destination address to the block list.

In this case, for the target service packet received by the serving gateway, the serving gateway further traverses the block list based on the destination address of the target service packet extracted from the target service packet, to determine whether the destination address of the target service packet exists in the block list. When the serving gateway determines that the destination address of the target service packet exists in the block list, it indicates that the target service packet whose destination address is the destination address of the target service packet is a packet having a security problem. In this case, the serving gateway blocks the target service packet.

It may be understood that the foregoing several implementations of determining to forward or block the service packet may be used separately, or may be used in combination. This is not limited.

Optionally, in this embodiment of this application, the service end provides the target service only for the registered user of the target service. Therefore, when the serving gateway determines that the destination address of the target service packet exists in the block list, the serving gateway parses out, based on the target service packet, a user ID of a registered user that initiates the target service packet, determines the registered user represented by the user ID as a suspicious user, and records the suspicious user. In a possible implementation, the serving gateway may record the suspicious user by using a suspicious user log. The suspicious user log includes at least one log record, and each log record is used to record a user ID of a suspicious user determined by the serving gateway. In this way, after determining the suspicious user (for example, a first user), the serving gateway first traverses the suspicious user log based on a user ID (denoted as a first ID) of the first user, and when no log record including the first ID exists in the suspicious user log, newly adds a log record used to record the first ID to the suspicious user log.

Optionally, the serving gateway further collects statistics on a quantity of times that the suspicious user expects to access a backend service through the serving gateway and that is recorded in the suspicious user log. When the serving gateway determines that a quantity of times that a same registered user expects to access the backend service through the serving gateway and that is recorded in the suspicious user log exceeds a threshold, the serving gateway determines the same user as a malicious user, and adds the same registered user to a user block list. The user block list is used to record the malicious user. In some examples, the user block list may be applied to another security policy as network security information. This is not limited in this embodiment of this application.

For example, a counter is set in each log record in the suspicious user log, and the counter is used to record the quantity of times that the suspicious user expects to access the backend service through the serving gateway. In this way, after determining the suspicious user (for example, the first user), the serving gateway traverses the suspicious user log based on the user ID (denoted as the first ID) of the first user, and when no log record including the first ID exists in the suspicious user log, newly adds a log record used to record the first ID to the suspicious user log, and sets a counter for the newly added log record. In this way, when the serving gateway determines the first user as a suspicious user again based on a received service packet, the serving gateway traverses the suspicious user log based on the first ID, and when determining that a log record including the first ID exists in the suspicious user log, increments a counter of the log record by one. When determining that a difference between a current value and an initial value of a counter of a log record in the suspicious user log exceeds a threshold, the serving gateway determines that a quantity of times that a suspicious user recorded in the log record expects to access the backend service through the serving gateway exceeds the threshold. Therefore, the serving gateway determines the suspicious user as a malicious user, and adds the malicious user to the user block list.

Optionally, the serving gateway may further set an upper limit of traffic of accessing the target service by the same registered user within preset duration. In this embodiment of this application, the service end provides the target service only for the registered user of the target service, and different registered users obtain different preconfigured addresses configured for the target service. In addition, when a malicious user initiates a DDoS attack against the target service by communicating with a botnet, a large quantity of packets (that is, DDoS attack packets) for accessing the target service are replayed. Therefore, a volume of traffic of accessing the target service by a registered user within the preset duration is monitored, to identify whether the traffic is DDoS attack traffic. For example, when a volume of traffic of accessing the target service by a registered user within the preset duration exceeds a threshold, the serving gateway determines that the traffic is DDoS attack traffic, so that the serving gateway can determine the registered user initiating the traffic as a malicious user, and add the malicious user to the user block list. In addition, limiting the upper limit of the traffic of accessing the target service by the same registered user within the preset duration can relieve pressure of processing a service packet by a back end (that is, the service end) of the serving gateway.

Optionally, the serving gateway supports NAT translation. In this case, after determining that the destination address of the target service packet is the preconfigured address configured for the target service, the serving gateway performs NAT translation on the destination address of the target service packet, and uses an address obtained by performing NAT on the destination address of the target service packet as a new destination address of the target service packet to send the target service packet. In other words, the serving gateway sends the target service packet to the address obtained by performing NAT on the destination address of the target service packet. Details are not described again.

When the serving gateway performs NAT translation on the packet used to access the target service, a real IP address of the target service may be an IPv4 address or an IPv6 address. This is not limited. It should be understood that the real IP address of the target service is a private network address of the service end that provides the target service and that is in a network to which the service end belongs.

In step 101 to step 104, because the IPv6 address space is huge, in this embodiment of this application, a large quantity of discrete preconfigured addresses can be configured for the target service through preconfiguration or according to the foregoing preset rule, and the discrete preconfigured addresses can be periodically delivered to the client. In the huge IPv6 address space, most addresses between the discrete preconfigured addresses are idle. Therefore, when the client uses, at different time, discrete preconfigured addresses configured for the target service to access the target service, and when the attack source attacks the target service in the direct DDoS carpet-bombing attack manner, the direct DDoS carpet-bombing attack is ineffective.

In addition, because the service end provides the target service only for the registered user of the target service, according to the method provided in this embodiment of this application, the malicious user can be further identified and discovered, to ensure network security by discarding or isolating a packet of the malicious user in time. The malicious user may be further included in a security information system for reference by another attack defense system. Because only the registered user can obtain the preconfigured address configured for the target service, the real source attack in the DDoS attack can be avoided. In addition, when a large quantity of registered users access the target service at the same time, because the registered users obtain different preconfigured addresses used to access the target service, each of the registered users establishes a network connection (for example, a TCP connection or a UDP connection) with the service end that provides the target service, so that traffic of accessing the target service can be dispersed on network connections between different registered users and the service end that provides the target service. In this way, the service end can disperse, to a plurality of CPUs for concurrent processing, traffic that is of accessing the target service but is on different network connections, to mitigate the elephant flow attack in the DDoS attack.

In some other embodiments, to filter DDoS attack traffic at a location close to a source end, FIG. 5 is a schematic flowchart of another packet transmission method according to an embodiment of this application. Optionally, the method may be applied to the implementation environment shown in FIG. 1 or FIG. 2. For brief description, the following is described by using an example in which a client that accesses a service (denoted as a target service) provided by a service end and a security module of the service end perform corresponding steps of the method in this embodiment of this application, and the security module of the service end is implemented by a serving gateway. Optionally, the target service may run on at least one server in at least one cloud data center in one of a plurality of regions. As shown in FIG. 5, the method includes the following steps.

Step 201: The serving gateway obtains at least one combination corresponding to the target service and/or at least one preconfigured address configured for the target service.

For detailed descriptions of obtaining, by the serving gateway, the at least one combination corresponding to the target service and/or the at least one preconfigured address configured for the target service, refer to related descriptions in step 104. Details are not described herein again.

Step 202: The serving gateway sends, to a forwarding node reachable to the serving gateway, the at least one combination corresponding to the target service and/or the at least one preconfigured address configured for the target service.

Because a set including a plurality of preconfigured addresses pre-obtained in the serving gateway is referred to as an allow list, "the serving gateway sends, to a forwarding node reachable to the serving gateway, the at least one combination corresponding to the target service and/or the at least one preconfigured address configured for the target service" may also be understood as that the serving gateway sends, to the forwarding node reachable to the serving gateway, the at least one combination or an allow list corresponding to the target service. For example, the at least one combination that corresponds to the target service and that is obtained by the serving gateway includes a first combination, and the first combination includes a first preconfiguration field and a first preset rule. In this case, after obtaining the first combination, the serving gateway may send the first preset rule and the first preconfiguration field in the first combination to the forwarding node reachable to the serving gateway.

Optionally, the forwarding node reachable to the serving gateway includes all nodes reachable to the serving gateway on a network, or the forwarding node reachable to the serving gateway includes a node that forwards a packet between the client accessing the target service and the serving gateway. For example, the forwarding node is a packet forwarding device like a router or a switch on the internet shown in FIG. 1 or FIG. 2. This is not limited.

For example, the serving gateway may include, in an extension field of a border gateway protocol (border gateway protocol, BGP), the at least one combination and/or the allow list that correspond/corresponds to the target service, to send the at least one combination or the allow list corresponding to the target service to the forwarding node reachable to the serving gateway.

Step 201 and step 202 are performed, so that after forwarding nodes that forward packets between the client accessing the target service and the serving gateway obtain the at least one combination or the allow list corresponding to the target service, the forwarding nodes may perform step 104 for the received service packets, to forward or block the service packets, so as to filter DDoS attack traffic at a location close to the client (that is, a source end). In this way, impact of a DDoS attack on a communication network between the client and the serving gateway can be reduced.

Refer to FIG. 6. The following describes the detailed process in which "the client obtains the access address of the registration service and registers as the registered user of the target service by using the registration service". Optionally, the process may be applied to the implementation environment shown in FIG. 2. As shown in FIG. 6, the process includes the following steps.

Step 301: The client sends a registration request to a portal service apparatus.

For example, when needing to access the target service for the first time, the client may first access a portal service of the target service, and in a process of accessing the portal service, send the registration request to the portal service apparatus that provides the portal service.

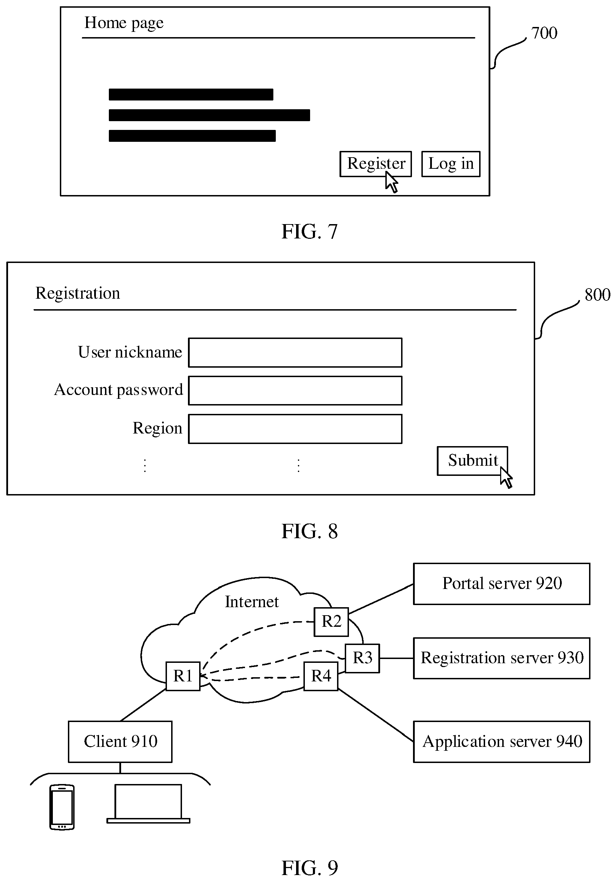

FIG. 7 is a diagram of a portal service access page according to an embodiment of this application. As shown in FIG. 7, the client first finds an access address of the portal service via web search (web search), and accesses the access address of the portal service, so that the client outputs the access page of the portal service to a user through an output interface (for example, a display screen) of the client. For example, the client displays an interface 700 shown in FIG. 7 to the user through the display screen of the client, where the interface 700 is a home page of the portal service. In this way, the client can implement, by responding to an input operation of the user on the access page of the portal service, communication between the client and the portal service apparatus that provides the portal service.

Still refer to FIG. 7. The interface 700 may include a "Register" control, and the "Register" control is used to submit a registration request to a registration service apparatus. When a user using the client needs to register as a registered user of the target service, the user performs an input operation (for example, a click/tap operation) on the "Register" control on the interface 700 through an input interface (for example, a mouse, a finger, or a stylus) of the client. In response to the input operation performed by the user on the "Register" control on the interface 700, the client sends a registration request to the portal service apparatus.

Step 302: In response to the received registration request, the portal service apparatus obtains the access address of the registration service, and returns the access address of the registration service to the client.

After receiving the registration request from the client, the portal service apparatus obtains the access address of the registration service in response to the registration request.

When the portal service apparatus is considered as the client in step 101 to step 104, the registration service is considered as the target service in step 101 to step 104, and the registration service apparatus that provides the registration service is considered as the service end that provides the target service in step 101 to step 104, for detailed descriptions of obtaining the access address of the registration service by the portal service apparatus, refer to the descriptions of obtaining the destination address of the target service packet by the client in step 101. Details are not described again.

After obtaining the access address, the portal service apparatus returns the access address to the client initiating the registration request.

Step 303: The client registers as the registered user of the target service based on the access address of the registration service.

When accessing the registration service based on the access address of the registration service, the client first sends a first registration packet whose destination address is the access address to the registration service apparatus that provides the registration service, where the first registration packet is used to obtain related information on a registration service access page (denoted as a registration page), and the registration page is used to receive registration information entered by the user. For example, the registration information includes but is not limited to a user nickname, an account password, a user identity ID, a region to which the user belongs, a user birth date, and the like. For a process in which the client sends the first registration packet to the registration service apparatus and a process in which a security module of the registration service apparatus forwards or blocks the first registration packet, refer to the foregoing descriptions in step 102 to step 104. Details are not described again. For a method performed by the security module of the registration service apparatus in this embodiment of this application, refer to step 103, step 104, step 201, and step 202 that are performed by the serving gateway. Details are not described again. In this manner, a DDoS attack by an attack source against the registration service apparatus can be avoided or mitigated. For details, refer to the foregoing descriptions of avoiding or mitigating the DDoS attack by the attack source against the target service in the method in embodiments of this application. Details are not described again.

Then, after the registration service apparatus receives the first registration packet and returns a response packet (denoted as a first response packet) of the first registration packet to the client, the client receives the first response packet, and outputs, to the user through the output interface (for example, the display screen) of the client, the related information that is on the registration page and that is carried in the first response packet. In an example, FIG. 8 is a diagram of outputting related information on a registration page by a client according to an embodiment of this application. As shown in FIG. 8, the client may display, on the display screen of the client, an interface 800 shown in FIG. 8 to the user based on the related information that is on the registration page and that is carried in the first response packet. The interface 800 is the registration page.

Then, the client obtains the registration information of the user via the registration page, and sends the registration information to the registration service apparatus. For a process in which the client sends the registration information to the registration service apparatus, refer to the descriptions in step 102 to step 104 in which the client sends the target service packet to the service end. Details are not described again.

For example, with reference to FIG. 8, the interface 800 includes an input box for obtaining the user nickname in the user registration information, an input box for obtaining the account password, an input box for obtaining the region to which the user belongs, and the like. A specific input form of the input box is not limited in this embodiment of this application. The input form includes but is not limited to character filling, drop-down list selection, and the like. The user performs an information input operation (for example, a click/tap operation for selection or a character filling operation) in each input box on the interface 800 through the input interface (for example, the mouse, the finger, or the stylus) of the client, and after completing the information input operation, performs an input operation (for example, a click/tap operation) on a "Submit" control. In response to the information input operation performed by the user on the interface 800 and the input operation performed on the "Submit" control, the client sends, to the registration service apparatus, the registration information entered by the user to the client through the information input operation.

Further, the registration service apparatus completes user registration based on the registration information. For example, a process in which the registration service apparatus completes user registration based on the registration information includes: The registration service apparatus establishes a correspondence between the registration information and the target service, generates a corresponding registered user ID for the registration information, returns the registered user ID to the client, and sends the registration information and the registered user ID to the service end.

Subsequently, the client may enter a login page of the target service via the access page of the portal service, and complete registered user authentication based on login information entered by the user on the login page, to enter a service page provided by the target service for the registered user. For example, with reference to FIG. 7, the portal page 700 further includes a "Log in" control, and the "Log in" control is used to enter the login page of the target service. On the login page, the client obtains, in response to an operation of entering the account password by the user on the login page, the login information entered by the user, where the login information includes but is not limited to the user nickname and the account password. Then, the client sends the login information to the service end, so that the service end authenticates the login information, and after the authentication succeeds, the client enters the service page provided by the target service for the registered user.

Through the process described in step 301 to step 303, the client may register as the registered user of the target service. In addition, in a scenario in which the service end provides the service only for the registered user of the target service, the client in which the registered user that completes registration is located can obtain a preconfigured address of the target service by using the related descriptions in step 101, and access the target service according to the method in step 102 to step 104. In this way, a real source attack in the DDoS attack launched against the target service can be prevented.

Optionally, after completing registration and logging in to the service page provided by the target service for the registered user, the client may further perform a recharge operation. In this way, it can be proved that the registered user who logs in to the client is a real user rather than a zombie user. Further, in the scenario in which the service end provides the service only for the registered user of the target service, only a client in which a real registered user who performs successful recharging is located can obtain the preconfigured address of the target service by using the related descriptions in step 101, and access the target service according to the method in step 102 to step 104. In this way, the real source attack in the DDoS attack launched against the target service can be prevented.

To further deepen understanding of the method provided in embodiments of this application, the following provides further descriptions with reference to specific examples.

FIG. 9 is a diagram of a process of a packet transmission method according to an embodiment of this application. As shown in FIG. 9, a client 910 is implemented as a terminal device like a mobile phone or a computer, and the client 910 can separately communicate with a portal server 920, a registration server 930, and an application server 940 through the internet. R1 is a gateway of the client 910, R2 is a gateway of the portal server 920, R3 is a gateway of the registration server 930, and R4 is a gateway of the application server 940.

When the client 910 needs to access a service 900 provided by the application server 940 for the first time, the client 910 communicates with the portal server 920 through a transmission link including R1 and R2, to perform step 301 and step 302, and the client 910 communicates with the registration server 930 through a transmission link including R1 and R3, to perform step 303, so that the client 910 registers as a registered user of the service 900. After the registration succeeds, the client 910 further recharges a registered user account, to prove that the client 910 is a real registered user.

A plurality of preconfigured addresses configured for the service 900 are preconfigured in the registration server 930 (or a plurality of combinations including a preconfiguration field and a preset rule are preconfigured for the service 900). Therefore, after the registration server 930 completes registration on the client 910 and the client 910 recharges the registered user account, the preconfigured address configured for the service 900 (or the combination that includes the preconfiguration field and the preset rule and that is preconfigured for the service 900) is periodically delivered to the client 910 through the transmission link including R1 and R3. In addition, for any one time at which the registration server 930 delivers the preconfigured address (or the combination including the preconfiguration field and the preset rule) configured for the service 900 to the client 910, when the registration server 930 currently delivers the preconfigured address (for example, an IPv6 address 11) to the client 910 through the transmission link including R1 and R3, the registration server 930 also sends the IPv6 address 11 to R4 through R3; or when the registration server 930 currently delivers, to the client 910 through the transmission link including R1 and R3, the combination (for example, a combination 1) including the preconfiguration field and the preset rule, the registration server 930 also sends the combination 1 to R4 through R3. For detailed descriptions, refer to related descriptions in step 101. Details are not described again. It can be learned that only the client in which the real registered user of the service 900 is located can obtain the preconfigured address configured for the service 900 or the combination including the preconfiguration field and the preset rule. In this way, a real source attack in a DDoS attack launched against the service 900 can be prevented.

After receiving the IPv6 address 11, the client 910 generates and sends a service packet 11 whose destination address is the IPv6 address 11, where the service packet 11 is used to access the service 900. After receiving the IPv6 address 11 sent by the registration server 930, the gateway R4 of the application server 940 adds the IPv6 address 11 to an allow list. Further, when R4 receives any service packet, for example, the service packet 11, R4 queries the allow list based on the destination address: the IPv6 address 11 of the service packet 11, performs NAT on the destination address of the service packet 11 when determining that the IPv6 address 11 exists in the allow list, and forwards the service packet 11 to the application server 940 based on an address obtained through NAT. Certainly, if R4 determines that a destination address of a service packet does not exist in the allow list, R4 directly blocks the service packet. For detailed descriptions, refer to related descriptions in step 101 to step 104. Details are not described again.

Alternatively, when receiving the combination 1, the client generates an IPv6 address 21 based on the combination 1, and generates and sends a service packet 21 whose destination address is the IPv6 address 21, where the service packet 21 is used to access the service 900. For detailed descriptions, refer to related descriptions in step 101 and step 102. Details are not described again. The gateway R4 of the application server 940 stores the combination 1 after receiving the combination 1 sent by the registration server 930. Further, when R4 receives any service packet, for example, the service packet 21, R4 queries, based on a preconfiguration field in the destination address of the service packet 21, a combination pre-obtained by R4. When finding, based on the preconfiguration field in the destination address of the service packet 21, the combination 1 including the preconfiguration field, R4 obtains a verification field through calculation according to a preset rule in the combination 1, and compares the verification field obtained through calculation with a verification field included in the destination address of the service packet 21. When R4 determines that the verification field obtained through calculation is the same as the verification field included in the destination address of the service packet 21, R4 performs NAT on the destination address of the service packet 21, and forwards the service packet 21 to the application server 940 based on an address obtained through NAT. Optionally, R4 further adds the destination address of the service packet 21 to the allow list, to subsequently quickly forward or block a service packet whose destination address is the foregoing destination address. When R4 determines that the verification field obtained through calculation is different from the verification field included in the destination address of the service packet 21, R4 blocks the service packet 21. For detailed descriptions, refer to related descriptions in step 101 to step 104. Details are not described again.

Because the client 910 can periodically obtain the IPv6 address used to access the service 900, and most addresses in a huge IPv6 address space are null, when the client 910 uses, at different time, different IPv6 addresses to access the service 900, and when an attack source attacks the service 900 in a direct DDoS carpet-bombing attack manner, the direct DDoS carpet-bombing attack cannot be effectively launched.

Optionally, after receiving the IPv6 address 11 (or the combination 1) from the registration server 930, R4 further diffuses the IPv6 address 11 (or the combination 1) to all forwarding nodes reachable to R4 on the internet, so that the forwarding nodes that receive the IPv6 address 11 (or the combination 1) perform the method in embodiments of this application for packet transmission. For detailed descriptions, refer to descriptions in step 201 and step 202. Details are not described again. In this manner, the service packet sent by the client 910 can be forwarded or blocked at a location close to the client 910, so that DDoS attack traffic is filtered at the location close to the client 910 (that is, a source end). In this way, impact of the DDoS attack on a communication network between the client 910 and R4 can be reduced.

Optionally, R4 may further detect a traffic volume of the service packet that is from the client 910 and that is used to access the service 900, and when the traffic volume of the service packet that is from the client 910 and that is used to access the service 900 exceeds a threshold, block the service packet that is from the client 910 and that is used to access the service 900. In this way, packet processing pressure of the application server 940 can be relieved.

Optionally, R4 may further determine, when a destination address of a service packet initiated by a registered user of the client 910 exists in a block list, the registered user as a suspicious user. Optionally, R4 collects statistics on a quantity of times that the service packet initiated by the registered user is blocked, and when the quantity of blocking times exceeds a threshold, determines the registered user as a malicious user, and adds the registered user to a user block list. Network security can be ensured by discarding or isolating a packet of the malicious user in time. The malicious user may be further included in a security information system for reference by another attack defense system.

The foregoing mainly describes the solutions provided in embodiments of this application from a perspective of the method.

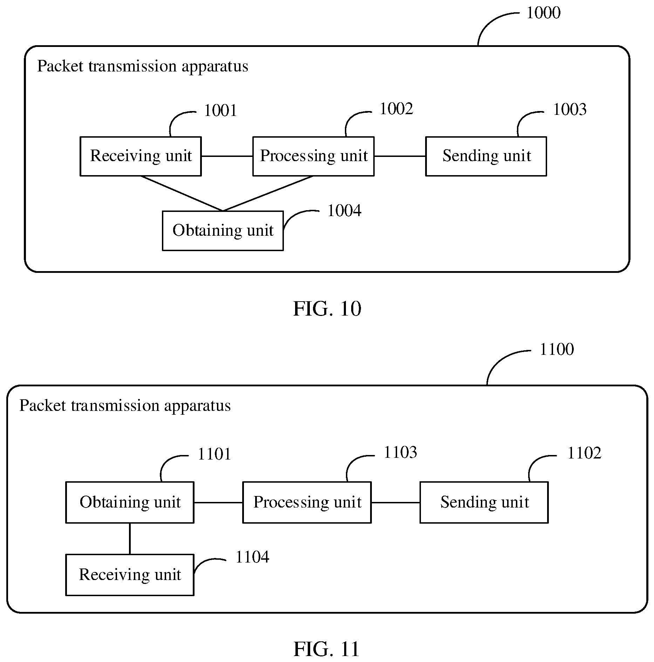

To implement the foregoing functions, FIG. 10 is a diagram of a structure of a packet transmission apparatus according to an embodiment of this application. As shown in FIG. 10, the packet transmission apparatus 1000 is used in a security module of a service end, the service end is configured to provide a target service for a client, the client is a registered user of the target service, and the target service runs on at least one server in at least one cloud data center in one of a plurality of regions. The packet transmission apparatus 1000 is specifically configured to perform the foregoing packet transmission method, for example, configured to perform steps performed by the security module of the service end in the method shown in FIG. 3, FIG. 5, or FIG. 6. The packet transmission apparatus 1000 may include a receiving unit 1001, a processing unit 1002, and a sending unit 1003.

The receiving unit 1001 is configured to receive a target service packet that is sent by the client and that is used to access the target service, where a destination address of the target service packet includes a verification field. The processing unit 1002 is configured to verify the destination address of the target service packet based on the verification field, to determine that the destination address of the target service packet is a preconfigured address. The sending unit 1003 is configured to send the target service packet to the service end. The preconfigured address is an IPv6 address that is configured for the client and that is used to access the target service.

In an example, with reference to FIG. 3, the receiving unit 1001 may be configured to perform step 103, and the processing unit 1002 and the sending unit 1003 may be configured to perform step 104.

Optionally, the processing unit 1002 is further configured to: when the destination address of the target service packet is not the preconfigured address, and/or when the destination address of the target service packet exists in a block list, block the target service packet. The block list is used to record a destination address of a service packet that is forbidden to be forwarded.

Optionally, the destination address of the target service packet further includes a preconfiguration field, and the packet transmission apparatus 1000 further includes an obtaining unit 1004. The obtaining unit 1004 is configured to obtain a first preset rule corresponding to the preconfiguration field, where the first preset rule is used to determine a verification field in the preconfigured address based on a logical operation. The processing unit 1002 is further configured to: determine a target verification field according to the first preset rule; and when the verification field included in the destination address of the target service packet is the same as the target verification field, determine that the destination address of the target service packet is the preconfigured address.

Optionally, the receiving unit 1001 is further configured to receive a second preset rule when preset duration expires, where the second preset rule is a preset rule obtained by updating the first preset rule.

Optionally, the security module of the service end is deployed in a gateway of the service end, and the sending unit 1003 is further configured to send the first preset rule to a forwarding node reachable to the gateway.

In an example, with reference to FIG. 5, the sending unit 1003 may be configured to perform step 202.

Optionally, the processing unit 1002 is further configured to: determine that a quantity of blocked service packets sent by the same registered user through the client exceeds a preset threshold, and add a user ID of the same registered user to a user block list.

Optionally, the security module of the service end is deployed in the gateway of the service end, and the processing unit 1002 is further configured to perform NAT on the destination address of the target service packet. The sending unit 1003 is specifically configured to send the target service packet after the NAT to the service end, where an address obtained by performing NAT on the destination address of the target service packet is an address of the service end.

Optionally, the address obtained by performing NAT on the destination address of the target service packet is an IPv6 address or an IPv4 address.

For detailed descriptions of the foregoing optional implementations, refer to the foregoing method embodiments. Details are not described herein again. In addition, for descriptions of any explanation and beneficial effect of the packet transmission apparatus 1000 provided above, refer to the foregoing corresponding method embodiments. Details are not described again.

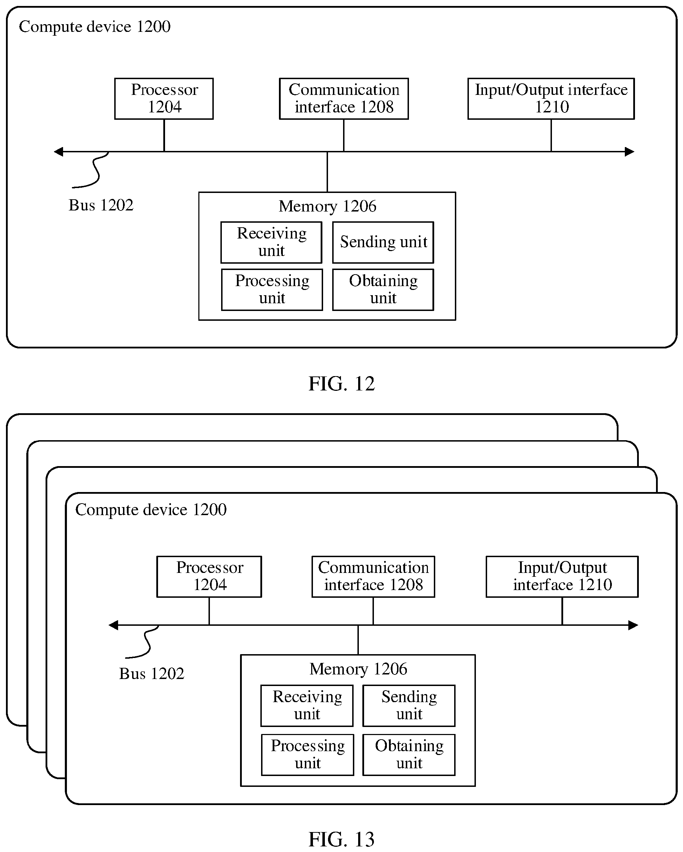

In an example, with reference to FIG. 12 described below, functions implemented by the receiving unit 1001 and the sending unit 1002 in the packet transmission apparatus 1000 may be implemented by a communication interface 1208 shown in FIG. 12. A function implemented by the processing unit 1002 in the packet transmission apparatus 1000 may be implemented by a processor 1204 in FIG. 12 by executing program code in a memory 1206 in FIG. 12. A function implemented by the obtaining unit 1004 in the packet transmission apparatus 1000 may be implemented by the communication interface 1208 shown in FIG. 12, or may be implemented by the processor 1204 in FIG. 12 by executing the program code in the memory 1206 in FIG. 12. This is not limited.

FIG. 11 is a diagram of a structure of another packet transmission apparatus according to an embodiment of this application. As shown in FIG. 11, the packet transmission apparatus 1100 is used in a client, the client is a registered user of a target service provided by a service end, the service end is configured to provide the target service for the client, and the target service runs on at least one server in at least one cloud data center in one of a plurality of regions. The packet transmission apparatus 1100 is specifically configured to perform the foregoing packet transmission method, for example, configured to perform steps performed by the client in the method shown in FIG. 3, FIG. 5, or FIG. 6. The packet transmission apparatus 1100 may include an obtaining unit 1101 and a sending unit 1102.

The obtaining unit 1101 is configured to obtain a destination address of a to-be-sent target service packet, where the destination address is one of preconfigured addresses, and the preconfigured address is an IPv6 address that is configured for the client and that is used to access the target service. The sending unit 1102 is configured to send the target service packet, where the target service packet is used to access the target service.

In an example, with reference to FIG. 3, the obtaining unit 1101 may be configured to perform step 101, and the sending unit 1102 may be configured to perform step 102.

Optionally, the obtaining unit 1101 is further configured to obtain a first preset rule, where the first preset rule is used to determine a verification field in the preconfigured address based on a logical operation, and the verification field is used to verify whether the destination address of the target service packet is the preconfigured address. The packet transmission apparatus 1100 further includes a processing unit 1103. The processing unit 1103 is configured to: determine a verification field in the destination address according to the first preset rule; and obtain the destination address of the target service packet based on the verification field.

Optionally, the packet transmission apparatus 1100 further includes a receiving unit 1104. The receiving unit 1104 is configured to receive a second preset rule when preset duration expires, where the second preset rule is a preset rule obtained by updating the first preset rule.

Optionally, the obtaining unit 1101 is further configured to: before obtaining the destination address of the to-be-sent target service packet, obtain an access address of a registration service by accessing a portal service of the target service. The processing unit 1103 is further configured to register as the registered user of the target service based on the access address of the registration service. The registration service is used to provide a user registration service for a user accessing the target service.

In an example, with reference to FIG. 6, the obtaining unit 1101 may be configured to perform step 301 and step 302. The processing unit 1103 may be configured to perform step 303.

Optionally, a portal service apparatus configured to provide the portal service is configured with at least one access address of the registration service. The receiving unit 1104 is further configured to receive the access address that is of the registration service and that is returned by the portal service apparatus.

For detailed descriptions of the foregoing optional implementations, refer to the foregoing method embodiments. Details are not described herein again. In addition, for descriptions of any explanation and beneficial effect of the packet transmission apparatus 1100 provided above, refer to the foregoing corresponding method embodiments. Details are not described again.

In an example, with reference to FIG. 12 described below, functions implemented by the sending unit 1102 and the receiving unit 1104 in the packet transmission apparatus 1100 may be implemented by the communication interface 1208 shown in FIG. 12. A function implemented by the processing unit 1003 in the packet transmission apparatus 1100 may be implemented by the processor 1204 in FIG. 12 by executing program code in the memory 1206 in FIG. 12. A function implemented by the obtaining unit 1101 in the packet transmission apparatus 1100 may be implemented by the communication interface 1208 shown in FIG. 12, or may be implemented by the processor 1204 in FIG. 12 by executing the program code in the memory 1206 in FIG. 12. This is not limited.

Persons skilled in the art should easily be aware that, in combination with units and algorithm steps of the examples described in embodiments disclosed in this specification, this application can be implemented by hardware or a combination of hardware and computer software. Whether a function is performed by hardware or hardware driven by computer software depends on particular applications and design constraints of the technical solutions. Persons skilled in the art may use different methods to implement the described functions for each particular application, but it should not be considered that the implementation goes beyond the scope of this application.

It should be noted that division into modules/units in FIG. 10 or FIG. 11 is an example, is merely logical function division, and may be other division during actual implementation. For example, two or more functions may be integrated into one processing module. The integrated module may be implemented in a form of hardware, or may be implemented in a form of a software functional module.

For example, the following uses the processing unit 1002 of the packet transmission apparatus 1000 shown in FIG. 10 as an example to describe an implementation of the processing unit 1002. Similarly, for implementations of the receiving unit 1001, the sending unit 1003, and the obtaining unit 1004 shown in FIG. 10, refer to the implementation of the processing unit 1002.

The unit is used as an example of a software functional unit, and the processing unit 1002 may include code running on a computing instance. The computing instance may include at least one of a physical host (compute device), a virtual machine, and a container. Further, there may be one or more computing instances. For example, the processing unit 1002 may include code running on a plurality of hosts/virtual machines/containers. It should be noted that the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Usually, one region may include a plurality of AZs.

Similarly, the plurality of hosts/virtual machines/containers configured to run the code may be distributed in a same virtual private cloud (virtual private cloud, VPC), or may be distributed in a plurality of VPCs. Usually, one VPC is disposed in one region. A communication gateway needs to be disposed in each VPC for communication between two VPCs in a same region and cross-region communication between VPCs in different regions. The VPCs are interconnected through the communication gateway.

The unit is used as an example of a hardware functional unit, and the processing unit 1002 may include at least one compute device like a server. Alternatively, the processing unit 1002 may be a device implemented by using an application-specific integrated circuit (application-specific integrated circuit, ASIC) or a programmable logic device (programmable logic device, PLD), or the like. The PLD may be implemented by using a complex programmable logical device (complex programmable logical device, CPLD), a field-programmable gate array (field-programmable gate array, FPGA), generic array logic (generic array logic, GAL), or any combination thereof.

A plurality of compute devices included in the processing unit 1002 may be distributed in a same region, or may be distributed in different regions. The plurality of compute devices included in the processing unit 1002 may be distributed in a same AZ, or may be distributed in different AZs. Similarly, the plurality of compute devices included in the processing unit 1002 may be distributed in a same VPC, or may be distributed in a plurality of VPCs. The plurality of compute devices may be any combination of compute devices such as a server, an ASIC, a PLD, a CPLD, an FPGA, and GAL.

It should be noted that in another embodiment, the processing unit 1002 may be configured to perform any step related to data/packet processing in the packet transmission method in embodiments of this application, the receiving unit 1001 may be configured to perform any step related to a receiving operation in the packet transmission method in embodiments of this application, the sending unit 1003 may be configured to perform any step related to a sending operation in the packet transmission method in embodiments of this application, and the obtaining unit 1004 may be configured to perform any step related to an obtaining operation in the packet transmission method in embodiments of this application. The steps implemented by the receiving unit 1001, the processing unit 1002, the sending unit 1003, and the obtaining unit 1004 may be specified as required. The receiving unit 1001, the processing unit 1002, the sending unit 1003, and the obtaining unit 1004 respectively implement different steps in the packet transmission method in embodiments of this application, to implement all functions of the packet transmission apparatus.

An embodiment of this application further provides a packet transmission system. The system includes a security module of a service end and a client. The security module of the service end is configured to perform a part performed by the security module of the service end in the foregoing packet transmission method. The client is configured to perform a part performed by the client in the foregoing packet transmission method.

Both the security module of the service end and the client may be implemented by using software or hardware. For example, the following describes an implementation of the security module of the service end. Similarly, for an implementation of the client, refer to the implementation of the security module of the service end.

The module is used as an example of a software functional unit, and the security module of the service end may include code running on a computing instance. The computing instance may be at least one of the following compute devices: a physical host (compute device), a virtual machine, a container, and the like. Further, there may be one or more compute devices. For example, the security module of the service end may include code running on a plurality of hosts/virtual machines/containers. It should be noted that the plurality of hosts/virtual machines/containers configured to run the application may be distributed in a same region, or may be distributed in different regions. The plurality of hosts/virtual machines/containers configured to run the code may be distributed in a same AZ, or may be distributed in different AZs. Each AZ includes one data center or a plurality of data centers that are geographically close to each other. Usually, one region may include a plurality of AZs.

Similarly, the plurality of hosts/virtual machines/containers configured to run the code may be distributed in a same VPC, or may be distributed in a plurality of VPCs. Usually, one VPC is disposed in one region. A communication gateway needs to be disposed in each VPC for communication between two VPCs in a same region and cross-region communication between VPCs in different regions. The VPCs are interconnected through the communication gateway.

The module is used as an example of a hardware functional unit, and the security module of the service end may include at least one compute device like a server. Alternatively, the security module of the service end may be a device implemented by using an ASIC or a PLD, or the like. The PLD may be implemented by a CPLD, an FPGA, GAL, or any combination thereof.

A plurality of compute devices included in the security module of the service end may be distributed in a same region, or may be distributed in different regions. The plurality of compute devices included in the security module of the service end may be distributed in a same AZ, or may be distributed in different AZs. Similarly, the plurality of compute devices included in the security module of the service end may be distributed in a same VPC, or may be distributed in a plurality of VPCs. The plurality of compute devices may be any combination of compute devices such as a server, an ASIC, a PLD, a CPLD, an FPGA, and GAL.

An embodiment of this application provides a compute device. As shown in FIG. 12, the compute device 1200 includes a bus 1202, a processor 1204, a memory 1206, and a communication interface 1208. Communication connections between the processor 1204, the memory 1206, and the communication interface 1208 are implemented through the bus 1202. Optionally, the compute device 1200 further includes an input/output interface 1210, and communication connections between the input/output interface 1210, the processor 1204, the memory 1206, and the communication interface 1208 are implemented through the bus 1202.

The bus 1202 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, the bus is represented by using only one line in FIG. 12. However, this does not indicate that there is only one bus or only one type of bus. The bus 1202 may include a path for transmitting information between components (for example, the memory 1206, the processor 1204, and the communication interface 1208) of the compute device 1200.

The processor 1204 may include a general-purpose processor and/or a dedicated hardware chip. The general-purpose processor may include a central processing unit (central processing unit, CPU), a micro processor (micro processor, MP), or a graphics processing unit (graphics processing unit, GPU). For example, the CPU is a single-core processor (single-CPU), or a multi-core processor (multi-CPU). The dedicated hardware chip is a hardware module capable of performing high-performance processing. The dedicated hardware chip includes at least one of a digital signal processor (digital signal processor, DSP), a data processing unit (data processing unit, DPU), an application-specific integrated circuit (application-specific integrated circuit, ASIC), a field-programmable logic gate array (field-programmable gate array, FPGA), another programmable logic device, a discrete gate, a transistor logic device, a discrete hardware component, a neural processing unit (neural processing unit, NPU), a tensor processing unit (tensor processing unit, TPU), an artificial intelligence (artificial intelligence) chip, or a network processor (network processor, NP). The processor 1204 may alternatively be an integrated circuit chip and has a signal processing capability. In an implementation process, some or all functions of the method provided in embodiments of this application may be implemented by using an integrated logic circuit of hardware in the processor 1204 or instructions in a form of software.

The memory 1206 may include a volatile memory (volatile memory), for example, a random access memory (random access memory, RAM). The memory 1206 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 1206 stores executable program code, and the processor 1204 executes the executable program code to separately implement functions of the receiving unit 1001, the processing unit 1002, the sending unit 1003, and the obtaining unit 1004 shown in FIG. 10, to implement the method part performed by the security module of the service end in the packet transmission method in embodiments of this application. In other words, the memory 1206 stores instructions used to perform the method of the functions implemented by the receiving unit 1001, the processing unit 1002, the sending unit 1003, and the obtaining unit 1004 in the packet transmission method in embodiments of this application.

Alternatively, the memory 1206 stores executable code, and the processor 1204 executes the executable program code to separately implement functions of the obtaining unit 1101, the sending unit 1102, the processing unit 1103, and the receiving unit 1104 shown in FIG. 11, to implement the method part performed by the client in the packet transmission method in embodiments of this application. In other words, the memory 1206 stores instructions used to perform the method of the functions implemented by the obtaining unit 1101, the sending unit 1102, the processing unit 1103, and the receiving unit 1104 in the packet transmission method in embodiments of this application.

The communication interface 1208 uses a transceiver module, for example, but not limited to a transceiver, to implement communication with another device or a communication network. For example, the communication interface 1208 may be any one or any combination of the following devices having a network access function: a network interface (for example, an Ethernet interface) or a wireless network interface card. The communication interface 1208 includes a receiving unit configured to receive data/a packet and a sending unit configured to send data/a packet.

The input/output interface 1210 is configured to implement human-computer interaction between a user and the compute device 1200, for example, implement text interaction, voice interaction, or the like between the user and the compute device 1200. The input/output interface 1210 includes an input interface used by the user to input information to the compute device 1200, and includes an output interface used by the compute device 1200 to output information to the user. In an example, the input interface includes but is not limited to a touchscreen, a keyboard, a mouse, a microphone, or the like, and the output interface includes but is not limited to a display screen, a speaker, or the like. The touchscreen, the keyboard, or the mouse is configured to input text/image information, the microphone is configured to input voice information, the display screen is configured to output text/image information, and the speaker is configured to output voice information.

It should be noted that the foregoing plurality of devices may be separately disposed on chips independent of each other, or at least some or all of the devices may be disposed on a same chip. Whether the devices are separately disposed on different chips or integrated and disposed on one or more chips usually depends on a requirement of a product design. Embodiments of this application impose no limitation on specific implementations of the foregoing devices. In addition, descriptions of procedures corresponding to the foregoing accompanying drawings have respective focuses. For a part that is not described in detail in a procedure, refer to related descriptions of other procedures.

All or some of the foregoing embodiments may be implemented by using software, hardware, firmware, or any combination thereof. When the software is used to implement embodiments, all or some of embodiments may be implemented in a form of a computer program product. A computer program product that provides a program development platform includes one or more computer instructions. When these computer program instructions are loaded and executed on the compute device 1200, all or some of functions of the packet transmission method provided in embodiments of this application are implemented.

In addition, the computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium stores the computer program instructions that provide the program development platform.

An embodiment of this application further provides a compute device cluster. The compute device cluster includes at least one compute device. The compute device may be a server, for example, a central server, an edge server, or a local server in a local data center. In some embodiments, the compute device may alternatively be a terminal device, for example, a desktop computer, a notebook computer, or a smartphone.

As shown in FIG. 13, the compute device cluster includes at least one compute device 1200. Memories 1206 in one or more compute devices 1200 in the compute device cluster may store same instructions used to perform the foregoing packet transmission method.

In some possible implementations, alternatively, the memories 1206 in the one or more compute devices 1200 in the compute device cluster may separately store instructions used to perform the foregoing packet transmission method. In other words, a combination of the one or more compute devices 1200 may jointly execute the instructions used to perform the foregoing packet transmission method.

It should be noted that memories 1206 in different compute devices 1200 in the compute device cluster may store different instructions, which are separately used to perform some functions of the packet transmission apparatus in FIG. 10. In other words, the instructions stored in the memories 1206 in the different compute devices 1200 may be used to implement functions of one or more the following unit modules: the receiving unit 1001, the processing unit 1002, the sending unit 1003, and the obtaining unit 1004 shown in FIG. 10.

Alternatively, memories 1206 in different compute devices 1200 in the compute device cluster may store different instructions, which are separately used to perform some functions of the packet transmission apparatus in FIG. 11. In other words, the instructions stored in the memories 1206 in the different compute devices 1200 may be used to implement functions of one or more the following unit modules: the obtaining unit 1101, the sending unit 1102, the processing unit 1103, and the receiving unit 1104 shown in FIG. 11.

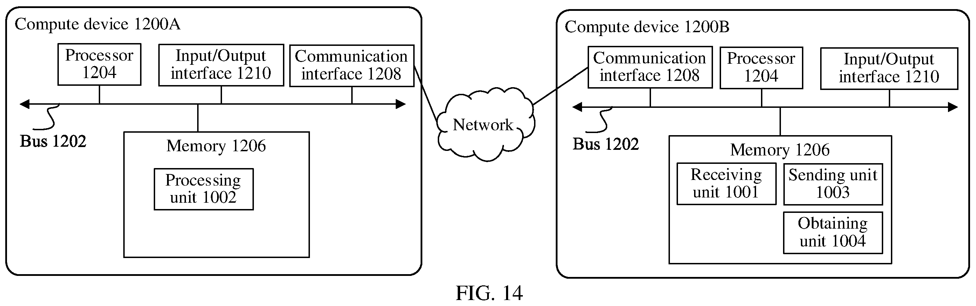

In some possible implementations, the one or more compute devices in the compute device cluster may be connected through a network. The network may be a wide area network, a local area network, or the like. FIG. 14 shows a possible implementation. As shown in FIG. 14, two compute devices 1200A and 1200B are connected through a network. Specifically, each compute device is connected to the network through a communication interface in the compute device. In this type of possible implementation, with reference to FIG. 10, a memory 1206 in the compute device 1200A stores instructions for implementing a function of the processing unit 1002 shown in FIG. 10. In addition, a memory 1206 in the compute device 1200B stores instructions for implementing functions of the receiving unit 1001, the sending unit 1003, and the obtaining unit 1004 shown in FIG. 10.

The connection manner in the compute device cluster shown in FIG. 14 may be used by considering that related calculation of verification processing needs to be performed on a destination address of a received packet in the method step performed by the security module of the service end in the packet transmission method provided in embodiments of this application. Therefore, it is considered that the function implemented by the processing unit 1002 is performed by the compute device 1200A, and other operations (such as receiving and sending operations) are performed by the compute device 1200B.

It should be understood that functions of the compute device 1200A shown in FIG. 14 may alternatively be completed by a plurality of compute devices 1200. Similarly, functions of the compute device 1200B may alternatively be completed by a plurality of compute devices 1200. This is not limited.

An embodiment of this application further provides another compute device cluster. For a connection relationship between compute devices in the compute device cluster, refer to the connection manner in the compute device cluster in FIG. 13 and FIG. 14. A difference is that memories 1206 in one or more compute devices 1200 in the compute device cluster may store same instructions used to perform the packet transmission method in embodiments of this application.

In some possible implementations, alternatively, the memories 1206 in the one or more compute devices 1200 in the compute device cluster may separately store some instructions used to perform the packet transmission method in embodiments of this application. In other words, a combination of the one or more compute devices 1200 may jointly execute the instructions used to perform the packet transmission method in embodiments of this application.

It should be noted that memories 1206 in different compute devices 1200 in the compute device cluster may store different instructions, which are used to perform some functions of the packet transmission system in embodiments of this application. In other words, the instructions stored in the memories 1206 in the different compute devices 1200 may be used to implement functions of one or more the following apparatus modules: the security module of the service end and the client described above.

An embodiment of this application further provides a computer program product including instructions. The computer program product may be software or a program product that includes instructions and that can run on a compute device or can be stored in any usable medium. When the computer program product runs on at least one compute device, the at least one compute device is caused to perform the packet transmission method in embodiments of this application.

An embodiment of this application further provides a computer-readable storage medium. The computer-readable storage medium may be any usable medium that can be stored by a compute device, or a data storage device, such as a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions. The instructions instruct the compute device to perform the packet transmission method provided in embodiments of this application.

An embodiment of this application further provides a chip. The chip includes a processor. When the processor runs program instructions or code, the chip including the processor or a device including the chip performs the foregoing packet transmission method. For example, the chip further includes an input interface, an output interface, and a memory. The input interface, the output interface, the processor, and the memory in the chip are connected through an internal connection path of the chip. The memory in the chip is configured to store the program instructions or the code run by the processor. The input interface and the output interface in the chip are configured for connection and communication between the chip and another chip or device.

In embodiments of this application, the terms "first", "second", and "third" are merely used for description, but shall not be understood as an indication or implication of relative importance. The term "at least one" means one or more, and the term "a plurality of" means plural, unless otherwise explicitly specified.

The term "and/or" in this application describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that the terms used in the descriptions of the various examples in this specification are merely intended to describe specific examples and are not intended to impose a limitation. The terms "one" ("a" and "an") and "the" of singular forms used in the descriptions of the various examples and the appended claims are also intended to include plural forms, unless otherwise specified in the context clearly.

It should be understood that determining B based on A does not mean that B is determined based only on A. B may alternatively be determined based on A and/or other information.

It should be understood that the term "include" (also referred to as "includes", "including", "comprises", and/or "comprising"), when used in this specification, specifies the presence of stated features, integers, steps, operations, elements, and/or components, but does not preclude presence or addition of one or more other features, integers, steps, operations, elements, components, and/or groups thereof.

It should be further understood that sequence numbers of the processes do not mean execution sequences in embodiments of this application. The execution sequences of the processes should be determined based on functions and internal logic of the processes, and should not constitute any limitation on implementation processes of embodiments of this application.

The foregoing descriptions are merely optional embodiments of this application, but are not intended to limit this application. Any modification, equivalent replacement, improvement, or the like made within the concept and principle of this application shall fall within the protection scope of this application.

It should be noted that information (including but not limited to user equipment information, user personal information, and the like), data (including but not limited to data for analysis, data for storage, data for display, and the like), and signals in this application are all authorized by users or fully authorized by all parties, and collection, use, and processing of related data need to comply with related laws, regulations, and standards of related countries and regions.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions recorded in the foregoing embodiments or make equivalent replacements to some technical features thereof. Such modifications or replacements do not make essence of the corresponding technical solutions depart from the protection scope of the technical solutions of embodiments of the present invention.

## Claims

1. A packet transmission method, applied to a security module of a service end, wherein the service end is configured to provide a target service for a client, the client is a registered user of the target service, the target service runs on at least one server in at least one cloud data center in one of a plurality of regions, and the method comprises:
receiving a target service packet sent by the client, wherein the target service packet is used to access the target service, and a destination address of the target service packet comprises a verification field;
verifying the destination address of the target service packet based on the verification field, to determine that the destination address of the target service packet is a preconfigured address, wherein the preconfigured address is an internet protocol version 6 IPv6 address that is configured for the client and that is used to access the target service; and
sending the target service packet to the service end.

2. The method according to claim 1, wherein the method further comprises:
when the destination address of the target service packet is not the preconfigured address, and/or when the destination address of the target service packet exists in a block list, blocking the target service packet, wherein the block list is used to record a destination address of a service packet that is forbidden to be forwarded.

3. The method according to claim 1 or 2, wherein the destination address of the target service packet further comprises a preconfiguration field, and the verifying the destination address of the target service packet based on the verification field, to determine that the destination address of the target service packet is the preconfigured address comprises:
obtaining a first preset rule corresponding to the preconfiguration field, wherein the first preset rule is used to determine a verification field in the preconfigured address based on a logical operation;
determining a target verification field according to the first preset rule; and
when the verification field comprised in the destination address of the target service packet is the same as the target verification field, determining that the destination address of the target service packet is the preconfigured address.

4. The method according to claim 3, wherein the method further comprises:
receiving a second preset rule when preset duration expires, wherein the second preset rule is a preset rule obtained by updating the first preset rule.

5. The method according to claim 3 or 4, wherein the security module is deployed in a gateway of the service end, and the method further comprises:
sending the first preset rule to a forwarding node reachable to the gateway.

6. The method according to claim 2, wherein the method further comprises:
determining that a quantity of blocked service packets sent by the same registered user through the client exceeds a preset threshold, and adding a user identifier ID of the same registered user to a user block list.

7. A packet transmission method, applied to a client, wherein the client is a registered user of a target service provided by a service end, the service end is configured to provide the target service for the client, the target service runs on at least one server in at least one cloud data center in one of a plurality of regions, and the method comprises:
obtaining a destination address of a to-be-sent target service packet, wherein the destination address is one of preconfigured addresses, and the preconfigured address is an internet protocol version 6 IPv6 address that is configured for the client and that is used to access the target service; and
sending the target service packet, wherein the target service packet is used to access the target service.

8. The method according to claim 7, wherein the obtaining the destination address of the to-be-sent target service packet comprises:
obtaining a first preset rule, wherein the first preset rule is used to determine a verification field in the preconfigured address based on a logical operation, and the verification field is used to verify whether the destination address of the target service packet is the preconfigured address;
determining a verification field in the destination address according to the first preset rule; and
obtaining the destination address based on the verification field.

9. The method according to claim 8, wherein the method further comprises:
receiving a second preset rule when preset duration expires, wherein the second preset rule is a preset rule obtained by updating the first preset rule.

10. The method according to any one of claims 7 to 9, wherein before the obtaining the destination address of the to-be-sent target service packet, the method further comprises:
obtaining an access address of a registration service by accessing a portal service of the target service, wherein the registration service is used to provide a user registration service for a user accessing the target service; and
registering as the registered user of the target service based on the access address of the registration service.

11. A packet transmission apparatus, used in a security module of a service end, wherein the service end is configured to provide a target service for a client, the client is a registered user of the target service, the target service runs on at least one server in at least one cloud data center in one of a plurality of regions, and the apparatus comprises:
a receiving unit, configured to receive a target service packet sent by the client, wherein the target service packet is used to access the target service, and a destination address of the target service packet comprises a verification field;
a processing unit, configured to verify the destination address of the target service packet based on the verification field, to determine that the destination address of the target service packet is a preconfigured address, wherein the preconfigured address is an internet protocol version 6 IPv6 address that is configured for the client and that is used to access the target service; and
a sending unit, configured to send the target service packet to the service end.

12. A packet transmission apparatus, used in a client, wherein the client is a registered user of a target service provided by a service end, the service end is configured to provide the target service for the client, the target service runs on at least one server in at least one cloud data center in one of a plurality of regions, and the apparatus comprises:
an obtaining unit, configured to obtain a destination address of a to-be-sent target service packet, wherein the destination address is one of preconfigured addresses, and the preconfigured address is an internet protocol version 6 IPv6 address that is configured for the client and that is used to access the target service; and
a sending unit, configured to send the target service packet, wherein the target service packet is used to access the target service.

13. A compute device cluster, comprising at least one compute device, wherein each compute device comprises a processor and a memory; and
a processor of the at least one compute device is configured to execute instructions stored in a memory of the at least one compute device, to cause the compute device cluster to perform the method according to any one of claims 1 to 6 or claims 7 to 10.

14. A computer program product comprising instructions, wherein when the instructions are run by a compute device, the compute device is caused to perform the method according to any one of claims 1 to 6 or claims 7 to 10.

15. A computer-readable storage medium, comprising computer program instructions, wherein when the computer program instructions are executed by a compute device, the compute device performs the method according to any one of claims 1 to 6 or claims 7 to 10.
